# EUROPEAN PATENT APPLICATION

(11) **EP 4 319 350 A1**
(43) Date of publication of application: **07.02.2024**
(21) Application number: 22779151.4
(22) Date of filing: 01.04.2022
(51) Int. Cl.: H04W 68/00, H04W 88/06

(54) **INFORMATION PROCESSING METHOD AND APPARATUS, DEVICE, AND STORAGE MEDIUM**

(30) Priority: 01.04.2021 CN 202110358057
(71) Applicant: Vivo Mobile Communication Co., Ltd., Dongguan, Guangdong 523863 (CN)
(72) Inventor: KE, Xiaowan, Dongguan, Guangdong 523863 (CN); BAO, Wei, Dongguan, Guangdong 523863 (CN)
(74) Representative: Murgitroyd & Company
(86) International application number: PCT/CN2022/084901
(87) International publication number: WO 2022/206971

(57) **Abstract**

Embodiments of this application provide an information processing method and apparatus, a device, and a storage medium. The information processing method includes: obtaining first information, the first information including at least one of: paging cause capability information of a network, a paging message received from a first network and related to a terminal, first indication information, second indication information, and paging cause capability information of the terminal; and performing a first operation according to the first information, where the first operation includes at least one of: performing an operation of determining a paging cause or not performing an operation of determining a paging cause, determining that the first network supports a paging cause function or determining that the first network does not support the paging cause function, and an AS of the terminal sending a determined paging cause value to a NAS of the terminal.

## Description

### CROSS-REFERENCE TO RELATED APPLICATION

This application claims the priority of Chinese Patent Application No. 202110358057.9 filed in China on April 1, 2021, the entire content of which is hereby incorporated by reference.

### TECHNICAL FIELD

This application relates to the field of communication technologies, and in particular to an information processing method and apparatus, a device, and a storage medium.

### BACKGROUND

For multiple subscriber identity module (Multiple Subscriber Identity Module, MUSIM) terminals that only have single sending and double receiving or single sending and single receiving functions, since the terminals cannot interact with multiple networks simultaneously, when there are services and/or data related to multiple networks, the terminals need to determine the switching between different networks according to paging initiation causes. The problem of how to determine a paging cause still needs to be solved.

### SUMMARY

Embodiments of this application provide an information processing method and apparatus, a device, and a storage medium, which can solve the problem of how to process services and/or data on a backhaul network.

In order to solve the above technical problem, this application is implemented as follows:

According to a first aspect, an embodiment of this application provides an information processing method for a first communication device, including:
obtaining first information, the first information including at least one of: paging cause capability information of a network, a paging message received from a first network and related to a terminal, first indication information, second indication information, and paging cause capability information of the terminal,
and performing a first operation according to the first information,
where the first operation includes at least one of: performing an operation of determining a paging cause or not performing an operation of determining a paging cause, determining that the first network supports a paging cause function or determining that the first network does not support a paging cause function, and an access stratum (AS) of the terminal sending a determined paging cause value to a non-access stratum (NAS) of the terminal,
where
   the paging cause capability information of a network is used for indicating one of: the network supporting the paging cause function, and the network not supporting the paging cause function;
   the paging cause capability information of the terminal is used for indicating one of: the terminal supporting the paging cause function, and the terminal not supporting the paging cause function;
   the first indication information is used for indicating one of: the terminal being in a multi-USIM mode, and the terminal being in a non-multi-USIM mode;
   and the second indication information is used for indicating one of: requiring to perform an operation of determining a paging cause, and not requiring to perform an operation of determining a paging cause.

According to a second aspect, an embodiment of this application provides an information processing method for a second communication device, including:
obtaining second information, the second information including at least one of: paging cause capability information of a network, a paging request sent by a CN and related to a terminal, first indication information, third indication information, and paging cause capability information of the terminal,
and performing a second operation according to the second information,
where the second operation includes at least one of:
   performing a related operation of sending paging cause capability information of a network,
   performing a related operation of a paging cause for the terminal,
   a paging message containing related information for indicating a paging cause or a first paging record list, or a paging message not containing related information for indicating a paging cause or a first paging record list,
   and a paging message only containing paging information related to terminals registered on a same network,
   where
      the first indication information is used for indicating one of: the terminal being in a multi-USIM mode, and the terminal being in a non-multi-USIM mode;
      the third indication information is used for indicating one of: requiring to perform a related operation of a paging cause for the terminal, and not requiring to perform a related operation of a paging cause for the terminal;
      the paging cause capability information of a network is used for indicating one of: the network supporting the paging cause function, and the network not supporting the paging cause function;
      and the paging cause capability information of the terminal is used for indicating one of: the terminal supporting the paging cause function, and the terminal not supporting the paging cause function.

According to a third aspect, an embodiment of this application provides an information processing method, including:
sending third information, the third information including at least one of: first indication information and third indication information,
where
the first indication information is used for indicating one of: the terminal being in a multi-USIM mode, and the terminal being in a non-multi-USIM mode;
and the third indication information is used for indicating one of: requiring to perform a related operation of a paging cause for the terminal, and not requiring to perform a related operation of a paging cause for the terminal.

According to a fourth aspect, an embodiment of this application provides an information processing apparatus, including:
a first obtaining unit, configured to obtain first information, the first information including at least one of: paging cause capability information of a network, a paging message received from a first network and related to a terminal, first indication information, second indication information, and paging cause capability information of the terminal;
and a first execution unit, configured to perform a first operation according to the first information,
where the first operation includes at least one of: performing an operation of determining a paging cause or not performing an operation of determining a paging cause, determining that the first network supports a paging cause function or determining that the first network does not support a paging cause function, and an AS of the terminal sending a determined paging cause value to an NAS of the terminal,
where
the paging cause capability information of a network is used for indicating one of: the network supporting the paging cause function, and the network not supporting the paging cause function;
the paging cause capability information of the terminal is used for indicating one of: the terminal supporting the paging cause function, and the terminal not supporting the paging cause function;
the first indication information is used for indicating one of: the terminal being in a multi-USIM mode, and the terminal being in a non-multi-USIM mode;
and the second indication information is used for indicating one of: requiring to perform an operation of determining a paging cause, and not requiring to perform an operation of determining a paging cause.

According to a fifth aspect, an embodiment of this application provides an information processing apparatus, including:
a second obtaining unit, configured to obtain second information, the second information including at least one of: paging cause capability information of a network, a paging request sent by a CN and related to a terminal, first indication information, third indication information, and paging cause capability information of the terminal,
and a second execution unit, configured to perform a second operation according to the second information, where the second operation includes at least one of:
   performing a related operation of sending paging cause capability information of a network,
   performing a related operation of a paging cause for the terminal,
   a paging message containing related information for indicating a paging cause or a first paging record list, or a paging message not containing related information for indicating a paging cause or a first paging record list,
   and a paging message only containing paging information related to terminals registered on a same network,
   where
      the first indication information is used for indicating one of: the terminal being in a multi-USIM mode, and the terminal being in a non-multi-USIM mode;
      the third indication information is used for indicating one of: requiring to perform a related operation of a paging cause for the terminal, and not requiring to perform a related operation of a paging cause for the terminal;
      the paging cause capability information of a network is used for indicating one of: the network supporting the paging cause function, and the network not supporting the paging cause function;
      and the paging cause capability information of the terminal is used for indicating one of: the terminal supporting the paging cause function, and the terminal not supporting the paging cause function.

According to a sixth aspect, an embodiment of this application provides an information processing apparatus, including:
a first sending unit, configured to send third information, the third information including at least one of: first indication information and third indication information,
where
the first indication information is used for indicating one of: the terminal being in a multi-USIM mode, and the terminal being in a non-multi-USIM mode;
and the third indication information is used for indicating one of: requiring to perform a related operation of a paging cause for the terminal, and not requiring to perform a related operation of a paging cause for the terminal.

According to a seventh aspect, an embodiment of this application provides a terminal, including a processor, a memory, and a program or an instruction stored in the memory and executable on the processor, where the program or instruction, when executed by the processor, implements steps of the information processing method according to the first aspect.

According to an eighth aspect, an embodiment of this application provides a network side device, including a processor, a memory, and a program or an instruction stored in the memory and executable on the processor, where the program or instruction, when executed by the processor, implements steps of the information processing method according to any one of the second aspect and the third aspect.

According to a ninth aspect, an embodiment of this application provides a readable storage medium, storing a program or an instruction, where the program or instruction, when executed by a processor, implements steps of the information processing method according to any one of the first aspect to the third aspect.

According to a tenth aspect, an embodiment of this application provides a chip, including a processor and a communication interface, where the communication interface is coupled to the processor, and the processor is configured to run a program or an instruction to implement the information processing method according to any one of the first aspect to the third aspect.

According to an eleventh aspect, provided is a computer program product, stored in a non-volatile storage medium, where the program product implements the information processing method according to any one of the first aspect to the third aspect when executed by at least one processor.

In embodiments of this application, first information is obtained, the first information including at least one of: paging cause capability information of a network, a paging message received from a first network and related to a terminal, first indication information, second indication information, and paging cause capability information of the terminal; and performing a first operation according to the first information, where the first operation includes at least one of: performing an operation of determining a paging cause or not performing an operation of determining a paging cause, determining that the first network supports a paging cause function or determining that the first network does not support a paging cause function, and an AS stratum of the terminal sending a determined paging cause value to an NAS stratum of the terminal. These embodiments of this application can determine whether to perform an operation of determining a paging cause and/or determine a paging cause.

### BRIEF DESCRIPTION OF THE DRAWINGS

FIG. 1 is a schematic view of a network structure of this application.
FIG. 2 is a schematic flowchart of an information processing method provided in an embodiment of this application.
FIG. 3 is a schematic flowchart of an information processing method provided in another embodiment of this application.
FIG. 4 is a schematic flowchart of an information processing method provided in still another embodiment of this application.
FIG. 5 is a schematic flowchart of an information processing method provided in yet another embodiment of this application.
FIG. 6 is a schematic flowchart of an information processing method provided in still yet another embodiment of this application.
FIG. 7 is a schematic flowchart of an information processing method provided in a further embodiment of this application.
FIG. 8 is a schematic structural view of an information processing apparatus provided in an embodiment of this application.
FIG. 9 is a schematic structural view of an information processing apparatus provided in another embodiment of this application.
FIG. 10 is a schematic structural view of an information processing apparatus provided in still another embodiment of this application.
FIG. 11 is a schematic view of a hardware structure of a terminal for implementing an embodiment of this application.
FIG. 12 is a schematic structural view of a network side device provided in an embodiment of this application.
FIG. 13 is a schematic structural view of another network side device provided in an embodiment of this application.

### DETAILED DESCRIPTION

In the specification and claims of this application, the term "include" and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device.

In the specification and claims of this application, terms "first", "second" and the like are used to distinguish similar objects, but are not used to describe a specific sequence or order. It is to be understood that such used data is interchangeable where appropriate so that these embodiments of this application can be implemented in an order other than those illustrated or described here. In addition, "and/or" used in the specification and claims represents at least one of the connected objects. The character "/" generally represents an "or" relationship between the associated objects.

In these embodiments of this application, the word such as "exemplarily" or "for example" is used to mean serving as an example, an illustration, or a description. Any embodiment or design scheme described as "exemplarily" or "for example" in these embodiments of this application should not be construed as being preferred or superior to other embodiments or design schemes. To be specific, the use of the word such as "exemplarily" or "for example" is intended to present the related concepts in a specific manner.

At present, for multiple subscriber identity module (Multiple Subscriber Identity Module, MUSIM) terminals that only have a single sending function, since the terminals cannot send uplink information to multiple networks simultaneously, the terminals need to move back and forth between different networks.

The following introduces these embodiments of this application with reference to the accompanying drawings. An information processing method, an apparatus and a communication device provided in these embodiments of this application are not limited to an LTE-advanced (LTE-Advanced, LTE-A) system of long term evolution (Long Term Evolution, LTE), and may further be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. The terms "system" and "network" in these embodiments of this application are often interchangeably used, and the described technology can be applied to the systems and radio technologies mentioned above, and can also be applied to other systems and radio technologies. However, the following exemplarily describes a new radio (New Radio, NR) system, and the NR term is used in most of the following descriptions. However, these technologies may also be applied to applications other than NR system applications, such as a 6th generation (6th Generation, 6G) communication system.

In order to better understand these embodiments of this application, the following technical points will be introduced first.

A multiple universal subscriber identity module (multi-USIM) terminal (also known as multi-USIM UE) is a device provided with two or more subscriber identity module (Subscriber Identity Module, SIM) cards. The SIM card is an electronic SIM card or a physical SIM card. From the perspective of a network, the same terminal device and different SIM cards constitute different user equipment (User Equipment, UE). In addition, the multi-USIM terminal may also be referred to as a multiple universal subscriber identity module (multiple universal subscriber identity module, MUSIM) terminal.

Optionally, the SIM card in the multi-USIM terminal may belong to the same operator or different operators. Wireless communication networks connected to different SIM cards may be the same or different.

Optionally, the SIM card may include one of: an SIM card, a universal subscriber identity module (Universal Subscriber Identity Module, USIM) card, and an embedded-SIM (Embedded-SIM, eSIM) card. The SIM card may also be referred to as another name, such as a "card" directly, and there are no restrictions in this application.

At present, there are still the following problems to be solved:
Problem 1: For UE, it is necessary to solve the problem of distinguishing whether the paging cause is: 1) a voice, 2) a non voice (non voice), and 3) an unknown paging cause.

The paging cause being unknown represents that it is uncertain whether the data of triggering paging is a voice or a non voice.

In an implementation, the paging cause is the type of data of triggering paging, including a service type of data.

The data includes control plane data and/or user plane data.

Problem 2: For a wireless access network (Wireless Access Network, RAN), it is necessary to solve: 1) whether to perform an operation of determining a cause for paging the terminal; 2) and whether and how to send an IE related to the paging cause.
- Scene 1: For a scene of RAN sharing (RAN Sharing), there are network 1 and network 2 sharing a network element of an RAN supporting a paging cause. There may be a situation that the network 1 does not support a paging cause function, but the network 2 supports a paging cause function.
- Scene 2: The paging initiated by a core network (Core Network, CN) is different from the paging initiated by an RAN. For the paging initiated by the CN, in a case that the paging request message of the CN does not contain a voice instruction as a paging cause, it is necessary to solve the problem that the RAN is unclear whether the paging cause is a non voice or is unknown, and the problem of whether the RAN contains an IE related to the paging cause in a paging message related to UE.
- Scene 3: A paging message of the Uu interface may carry at most N (such as 32) paging requests of UE. In a case that all paging causes of the terminal in the paging message are non voices, it is necessary to solve the problem of whether a paging message related to UE contains an IE related to the paging cause.
- Scene 4: In a case that there are multiple causes for triggering paging or multiple types of data of triggering paging, it is necessary to solve the problem of how to contain paging cause related information. For example, the type of data of triggering paging includes: voice type data and non-voice type data. At this time, the paging message only contains information for indicating that the cause for paging the terminal is a voice; or the information for indicating that the cause for paging the terminal is a voice or a non voice is unclear.

In an optional embodiment of this application, a paging cause of the terminal and a cause for paging the terminal represent the same meaning and may be compatible.

In an optional embodiment of this application, the support for a paging cause function includes the support for indicating a voice as a cause for paging the terminal.

In an optional embodiment of this application, a paging message contains related information for indicating a paging cause or a first paging record list.
(1) In an optional embodiment of this application, the related information for indicating a paging cause includes at least one of: a paging record list for indicating a cause for paging the terminal, information of the number of terminals for indicating that the paging cause is a first value, information of the number of terminals for indicating that the paging cause is a second value, and a bit sequence for indicating that the paging cause is a first value and/or a second value.
   In an optional embodiment of this application, the paging cause may include at least one of: a first value, a second value, and an unknown value.
(2) In an optional embodiment of this application, the first paging record list includes at least one of: a paging record list related to a multi-USIM terminal, and a paging record list related to a terminal supporting the paging cause function. The paging record list related to a multi-USIM terminal may only contain paging records related to the multi-USIM terminal. The paging record list related to a terminal supporting the paging cause function may only contain paging records related to the terminal supporting the paging cause function.

The multi-USIM terminal includes at least one of: a terminal in a multi-USIM mode, a terminal supporting a multi-USIM function, and a terminal supporting a paging cause function.

In an optional embodiment of this application, the network is a mobile communication network.

In an optional embodiment of this application, the paging message includes at least one of: a paging message of a Uu interface (Uu interface); and a notification message in a non-access stratum (Non-access Stratum, NAS) message.

In an optional embodiment of this application, the paging message related to a terminal includes at least one of: a paging message for paging the terminal, and a paging message concerned by the terminal (such as a paging message triggered by system information change).

In an optional embodiment of this application, the paging request message is a paging request message for an interface between a CN and an RAN.

In an optional embodiment of this application, the CN paging is paging initiated by a CN, such as a notification message in NAS signaling sent by the CN, a paging request message sent by a CN to an RAN, or a paging message sent by an RAN according to a paging request of a CN.

In an optional embodiment of this application, the RAN paging is paging initiated by an RAN, such as a paging message initiated by a terminal in a radio resource control (Radio Resource Control, RRC) inactive state.

In an optional embodiment of this application, the paging cause is the type of data of triggering paging. The type of data includes a service type of data. In an optional embodiment of this application, the type of service and/or data may be embodied in a paging cause in a paging message, and notification type information in a notification message. The type of service and/or data may be the type of service and/or data of a network side. The type of data includes the type of service to which the data belongs, and the type of the data itself (such as control plane signaling).
(1) In an optional embodiment of this application, the paging cause function of a network includes at least one of:
   determining the type of data;
   containing the type of data as a paging cause (such as a voice) in a paging request message and/or a paging message related to the terminal;
   and determining whether the paging message contains information related to the paging cause (such as information element (IE Information Element)) according to the type of data,
   where the data includes at least one of: data of triggering paging of the terminal, received or generated data related to the terminal, downlink data of the terminal, and data corresponding to downlink data notification of the terminal.
(2) In an optional embodiment of this application, the paging cause function of a network element of a CN of a network includes at least one of:
   determining the type of data, and sending the type of data as a paging cause to a terminal and/or a network element of an RAN;
   and determining whether the paging message contains information related to the paging cause (such as information element (IE Information Element)) according to the type of data,
   where the data includes at least one of: data of triggering paging of the terminal, received or generated data related to the terminal, downlink data of the terminal, and data corresponding to downlink data notification of the terminal.
(3) In an optional embodiment of this application, the paging cause function of a network element of an RAN of a network includes at least one of:
   understanding paging cause related information in a paging request message triggered by a network element of a CN;
   containing the paging cause related information in a paging message of a Uu interface;
   for a terminal in an inactive state, determining the type of data;
   for the terminal in an inactive state, determining a cause for triggering paging of the terminal according to the type of data;
   determining whether the paging message contains information related to the paging cause (such as information element (IE Information Element)) according to the type of data or the determined paging cause;
   and containing the type of data as a paging cause (such as a voice) in the paging message related to the terminal, or containing the determined paging cause in the paging message related to the terminal.

In an implementation, only in a case that it is determined that the paging cause is a first value, the determined paging cause is contained in the paging message related to the terminal,
where the data includes at least one of: data of triggering paging of the terminal, received or generated data related to the terminal, downlink data of the terminal, and data corresponding to downlink data notification of the terminal.

In an optional embodiment of this application, the paging cause function of a terminal includes at least one of: understanding a value of a paging cause, and determining the type of data, where the data includes at least one of: data of triggering paging of the terminal.

In an optional embodiment of this application, the paging cause at least supports a voice.

In an optional embodiment of this application, the paging cause may include at least one of: a first value, a second value, and an unknown value.

In an optional embodiment of this application, the paging cause being unknown represents at least one of: not determining whether the cause for triggering paging or data is a voice or a non voice, not determining the cause for triggering paging, or not determining the type of data of triggering paging, and paging triggered by any type of data and/or service.

In an optional embodiment of this application, the first value includes at least one of: a voice, a short message, IP multimedia core network subsystem (IP Multimedia Core Network Subsystem, IMS) signaling, control plane signaling, and system message change.

In an optional embodiment of this application, the second value includes one of: a non voice, other values except the value range of the first value, and other paging causes that trigger paging except the value range of the first value.

In an optional embodiment of this application, the value range of the first value includes at least one of: a voice, a short message, IMS signaling, and control plane signaling.

Optionally, the first value is one or more values within the value range of the first value.
Example 1: The value range of the first value may include X, Y, and Z, and then, the second value may be any other paging causes that trigger paging except X, Y, and Z.
   (1) In an implementation, the cause for triggering paging or the type of data of triggering paging is X, and then, the first value is X.
   (2) In another implementation, the cause for triggering paging or the type of data of triggering paging is X and Y, and then, the first value is X and Y.
   (3) In still another implementation, the cause for triggering paging or the type of data of triggering paging is A, and then, the cause for triggering paging is the second value.
Example 2: The value range of the first value may be X, and then, the second value may be not X.
   (1) In an implementation, the cause for triggering paging or the type of data of triggering paging is X, and then, the first value received by the terminal is X.
   (2) In another implementation, the cause for triggering paging or the type of data of triggering paging is X and Y, and then, the paging cause is one of: the first value (namely X), and the first value and/or the second value.
   (3) In still another implementation, the cause for triggering paging or the type of data of triggering paging is Y, and then, the paging cause is the second value. In an optional embodiment of this application, the type of data includes, but is not limited to, at least one of: control plane signaling (such as NAS signaling), user plane data, and the service type to which the data belongs. The control plane signaling may include, but is not limited to, at least one of: CN location update.

In an optional embodiment of this application, the type of service and/or data includes, but is not limited to, at least one of: IMS, an IMS voice service, a location service (LCS), a short message, control plane signaling (such as CN location update), IMS signaling (such as an IMS periodic report), paging reception, RAN notification, refusal response to paging (such as busy indication), an Internet Protocol Version 6 (Internet Protocol Version 6, IPv6) broadcast, and the like. Generally, the IMS has a dedicated data channel (such as a PDU session). When data exists in a data channel for the IMS, the information of the corresponding type of the service and/or data can be derived. The IMS includes at least one of: an IMS voice, an IMS short message, IMS signaling, and the like.

In an optional embodiment of this application, the multi-USIM mode includes at least one of: the terminal loading multiple subscriber identity modules (Subscriber Identity Module, SIM) (including USIM), the terminal requesting at least one multi-USIM (Multi-USIM) function from a network, and the terminal supporting at least one multi-USIM function. The multi-USIM function includes at least one of: a paging cause function, a paging conflict avoidance function, a function of the terminal being triggered to leave the network, and a function of the terminal rejecting paging.

In an optional embodiment of this application, the first network supporting a paging cause function includes at least one of: a CN of the first network supporting a paging cause function, and an RAN of the first network supporting a paging cause function. A CN of the first network supporting a paging cause function may include a network element of a CN of the first network supporting a paging cause function. Some network elements of a CN of the first network may support a paging cause function. An RAN of the first network supporting a paging cause function may include a network element of an RAN of the first network supporting a paging cause function. Some network elements of an RAN of the first network may support a paging cause function.

In an optional embodiment of this application, the first network not supporting a paging cause function includes at least one of: a CN of the first network not supporting a paging cause function, and an RAN of the first network not supporting a paging cause function. A CN of the first network not supporting a paging cause function may include a network element of a CN of the first network not supporting a paging cause function. Some network elements of a CN of the first network may not support a paging cause function. An RAN of the first network not supporting a paging cause function may include a network element of an RAN of the first network not supporting a paging cause function. Some network elements of an RAN of the first network may not support a paging cause function.

In an optional embodiment of this application, a non-connected state may include at least one of: an idle state and an inactive state.
(1) In an optional embodiment of this application, the inactive state includes an RRC inactive state. In an optional embodiment of this application, the idle state includes at least one of: an RRC idle state and a connection management (Connection Management, CM) idle state.

In an optional embodiment of this application, the connection between a terminal and a network includes at least one of: RRC connection and NAS connection.

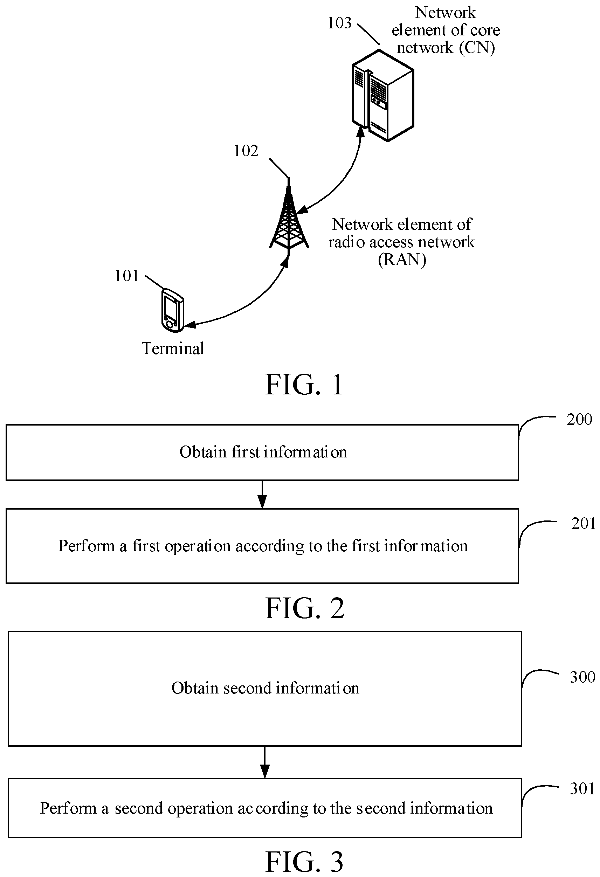

The following introduces these embodiments of this application with reference to the accompanying drawings. A connection control method, an apparatus and a communication device provided in these embodiments of this application can be applied to the following network system. As shown in FIG. 1, the network system includes: a terminal 101, a network element 102 of a radio access network (Radio Access Network, RAN) and a network element 103 of a core network (Core Network, CN).

In an embodiment of this application, the communication device may include at least one of: a communication network element device and a terminal.

In an embodiment of this application, the communication network element may include at least one of: a network element of the CN and a network element of the RAN.

In this embodiment of this application, the network element of the CN may include, but is not limited to, at least one of: a CN device, a CN node, a CN function, a network element of the CN, a mobility management entity (Mobility Management Entity, MME), an access management function (Access Management Function, AMF), a session management function (Session Management Function, SMF), a user plane function (User Plane Function, UPF), a serving gate way (serving GW, SGW), a PDN gate way (PDN Gate Way, PDN GW), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a centralized network configuration (Centralized Network Configuration, CNC).

In this embodiment of this application, the network element of the RAN may include, but is not limited to, at least one of: an RAN device, an RAN node, an RAN function, an RAN unit, a third generation partnership project (Third Generation Partnership Project, 3GPP) RAN, a non-3GPP RAN, a centralized unit (Centralized Unit, CU), a distributed unit (Distributed Unit, DU), a NodeB, an evolved Node B (evolved Node B, eNB), a 5G base station (gNB), a radio network controller (Radio Network Controller, RNC), a NodeB (NodeB), a non-3GPP Inter Working Function (Non-3GPP Inter Working Function, N3IWF), an access controller (Access Controller, AC) node, an access point (Access Point, AP), a device or wireless local area networks (Wireless Local Area Networks, WLAN) node, and an N3IWF.

The base station may be a base transceiver station (BTS, Base Transceiver Station) in a global system for mobile communications (Global System For Mobile Communications, GSM) or a code division multiple access (Code Division Multiple Access, CDMA), a NodeB (NodeB) in a wideband code division multiple access (Wideband Code Division Multiple Access, WCDMA), or an eNB or an e-NodeB (eNB or e-NodeB, evolutional Node B) and a 5G base station (gNB) in LTE, which is not limited in this embodiment of this application.

In this embodiment of this application, a terminal (such as UE) may include a relay supporting a terminal function and/or a terminal supporting a relay function. The terminal may also be referred to as a terminal device or user equipment (User Equipment, UE). The terminal may be a terminal side device, such as a mobile phone, a tablet personal computer, (Tablet Personal Computer), a laptop computer (Laptop Computer), a personal digital assistant (Personal Digital Assistant, PDA), a mobile Internet device (Mobile Internet Device, MID), a wearable device (Wearable Device), an in-vehicle device, or the like. It should be noted that, the specific type of the terminal is not limited in this embodiment of this application.

In an optional embodiment of this application, obtaining or acquiring can be understood as obtaining from configuration, receiving, receiving after requesting, obtaining through self-learning, deriving according to unreceived information, or obtaining after processing according to received information, which can be specifically determined according to actual needs and is not limited in this embodiment of this application.

In an optional embodiment of this application, sending may include broadcasting, broadcasting in a system message, returning after responding to a request, sending of dedicated signaling, and the like.

The technical solutions in these embodiments of this application are clearly and completely described below with reference to the accompanying drawings in these embodiments of this application. Apparently, the described embodiments are merely some rather than all of these embodiments of this application. All other embodiments obtained by a person of ordinary skill in the art based on these embodiments of this application without making creative efforts shall fall within the protection scope of this application.

Referring to FIG. 2, an embodiment of this application provides an information processing method. An executive body of the method is a first communication device. The first communication device may be a terminal. As shown in FIG. 1, the method includes the following steps:
Step 200: First information is obtained, where the first information includes at least one of: paging cause capability information of a network, a paging message received from a first network and related to a terminal, first indication information, second indication information, and paging cause capability information of the terminal.
Step 201: A first operation is performed according to the first information,
   where the first operation includes at least one of: performing an operation of determining a paging cause or not performing an operation of determining a paging cause, determining that the first network supports a paging cause function or determining that the first network does not support a paging cause function, and an AS of the terminal sending a determined paging cause value to an NAS of the terminal,
   where
      the paging cause capability information of a network is used for indicating one of: the network supporting the paging cause function, and the network not supporting the paging cause function;
      the paging cause capability information of the terminal is used for indicating one of: the terminal supporting the paging cause function, and the terminal not supporting the paging cause function;
      the first indication information is used for indicating one of: the terminal being in a multi-USIM mode, and the terminal being in a non-multi-USIM mode;
      and the second indication information is used for indicating one of: requiring to perform an operation of determining a paging cause, and not requiring to perform an operation of determining a paging cause.

In an implementation, the terminal being in a multi-USIM mode includes: the terminal sending information for indicating that the terminal is in a multi-USIM mode to the first network.

In an implementation, the terminal being in a non-multi-USIM mode includes one of: the terminal not sending information for indicating that the terminal is in a multi-USIM mode to the first network, and the terminal sending indication information for indicating that the terminal is in a non-multi-USIM mode to the first network.

Optionally, the operation of determining a paging cause includes at least one of: determining that the paging cause is a first value, determining that the paging cause is a second value, and determining that the paging cause is unknown,
where
the first value includes at least one of: a voice, a short message, IMS signaling, control plane signaling, and system message change;
the second value includes one of: a non voice, other values except the value range of the first value, and other paging causes that trigger paging except the value range of the first value;
and the value range of the first value includes at least one of: a voice, a short message, IMS signaling, and control plane signaling.

Optionally, the first value is one or more values within the value range of the first value.
Example 1: The value range of the first value may include X, Y, and Z, and then, the second value may be any other paging causes that trigger paging except X, Y, and Z.
   (1) In an implementation, the cause for triggering paging or the type of data of triggering paging is X, and then, the first value is X.
   (2) In another implementation, the cause for triggering paging or the type of data of triggering paging is X and Y, and then, the first value is X and Y.
   (3) In still another implementation, the cause for triggering paging or the type of data of triggering paging is A, and then, the cause for triggering paging is the second value.
Example 2: The value range of the first value may be X, and then, the second value may be not X.
   (1) In an implementation, the cause for triggering paging or the type of data of triggering paging is X, and then, the first value received by the terminal is X.
   (2) In another implementation, the cause for triggering paging or the type of data of triggering paging is X and Y, and then, the paging cause is one of: the first value (namely X), and the first value and/or the second value.
   (3) In still another implementation, the cause for triggering paging or the type of data of triggering paging is Y, and then, the paging cause is the second value.

Optionally, the operation of determining that the paging cause is a first value includes: in a case that a first condition is met, determining that the paging cause is a first value,
where the first condition includes at least one of:
the paging message containing information for indicating that the cause for paging the terminal is a first value;
and the terminal being in a multi-USIM mode.

Optionally, the operation of determining that the paging cause is a second value includes: in a case that a second condition is met, determining that the paging cause is a second value,
where the second condition includes at least one of:
the first network supporting a paging cause function;
the paging message not containing paging cause related information related to the terminal;
the paging message not containing information for indicating that the cause for paging the terminal is a first value;
the paging message containing information for indicating that the cause for paging the terminal is a second value;
the first network supporting a paging cause function;
the terminal supporting a paging cause function;
and the terminal being in a multi-USIM mode.

In an implementation, the second condition includes at least one of: the first network supporting a paging cause function; the terminal being in a multi-USIM mode; and the paging message not containing paging cause related information related to the terminal, or the paging message not containing information for indicating that the cause for paging the terminal is a first value.

It is not difficult to understand that in this implementation, the first network can only display the paging cause related information related to the terminal in the paging message when the paging cause of the terminal is a first value. Therefore, in a case that the paging message does not contain the paging cause related information related to the terminal, the terminal can determine that the paging cause is a second value according to the first network supporting a paging cause function.

In another implementation, the second condition includes: the paging message containing information for indicating that the cause for paging the terminal is a second value.

Optionally, the operation of determining that the paging cause is unknown or the condition of not performing an operation of determining a paging cause includes: in a case that a third condition is met, performing at least one of: determining that the paging cause is unknown, and not performing an operation of determining a paging cause,
where the third condition includes at least one of:
the first network not supporting a paging cause function;
the paging message not containing related information for indicating a paging cause or a first paging record list;
the paging message not containing information for indicating that the cause for paging the terminal is a first value;
the paging message not containing information for indicating that the cause for paging the terminal is a second value;
the terminal not supporting a paging cause function;
and the terminal being in a non-multi-USIM mode.

In an implementation, the first network supporting a paging cause function includes at least one of: a network element of a CN of the first network supporting a paging cause function, and a network element of an RAN of the first network supporting a paging cause function.

In an implementation, the first network not supporting a paging cause function includes at least one of: a network element of a CN of the first network not supporting a paging cause function, and a network element of an RAN of the first network not supporting a paging cause function.

In an implementation, according to the paging message not containing related information for indicating a paging cause or a first paging record list, it is determined that the first network or a network element of an RAN of the first network does not support paging cause related information.

Optionally, the first network supporting a paging cause function includes: determining that the first network supports a paging cause function according to at least one of:
obtaining paging cause capability information of a network from the first network;
the paging cause capability information of a network indicating that the network supports the paging cause function;
and the paging message containing information related to a paging cause.

Optionally, the obtaining paging cause capability information of a network includes: obtaining the paging cause capability information of a network from at least one of a network element of a CN of the first network and/or a network element of an RAN of the first network;
and/or
the obtaining first indication information and/or second indication information includes: the AS of the terminal obtains first indication information and/or second indication information from the NAS of the terminal.

Optionally, the paging cause capability information of a network includes at least one of:
paging cause capability information of each network supported by a cell or an RAN;
and paging cause capability information for each area.

In an implementation, the area may be one of: a registration area of the terminal, a location area of the terminal, and an area specified in a tracking area code list (Tracking Area Code List, TAI List) configured by the network for the terminal.

Optionally, the paging cause capability information of a network includes at least one of: paging cause capability information of a CN, and paging cause capability information of an RAN,
where
the paging cause capability information of a CN is used for indicating one of: the CN supporting the paging cause function, and the CN not supporting the paging cause function;
and the paging cause capability information of an RAN is used for indicating one of: the RAN supporting the paging cause function, and the RAN not supporting the paging cause function.

In an implementation, paging cause capability information of a network is received from a system information block (System Information Block, SIB) broadcast of an RAN of the first network.

In an implementation, paging cause capability information of a network is received from a network element of a CN of the first network. The paging cause capability information of a network may distinguish a registration area (such as a TA List);
and/or
the determining that the first network supports a paging cause function includes: in a case that a sixteenth condition is met, determining that the first network supports a paging cause function,
where the sixteenth condition includes at least one of:
   the paging cause capability information of a network indicating at least one of: the first network supporting a paging cause function, the network element of the CN of the first network supporting a paging cause function, and the network element of the RAN of the first network supporting a paging cause function,
   and the paging message containing related information for indicating a paging cause or a first paging record list;
      and/or
   the determining that the first network does not support a paging cause function includes: in a case that a seventeenth condition is met, determining that the first network does not support a paging cause function,
   where the seventeenth condition includes at least one of:
      the paging cause capability information of a network indicating at least one of: the first network not supporting a paging cause function, the network element of the CN of the first network not supporting a paging cause function, and the network element of the RAN of the first network not supporting a paging cause function,
      and the paging message not containing related information for indicating a paging cause or a first paging record list.

The information processing method provided in this embodiment of this application can support the terminal to determine a paging cause and distinguish whether the paging cause is a second value or the paging cause is unknown.

Referring to FIG. 3, an embodiment of this application provides another information processing method. An executive body of the method is a second communication device. The second communication device may be a communication device of the first network, including one of: a network element of an RAN, and a network element of a CN. As shown in FIG. 3, the method includes the following steps:

Step 300: Second information is obtained, the second information including at least one of: paging cause capability information of a network, a paging request sent by a CN and related to a terminal, first indication information, third indication information, and paging cause capability information of the terminal.

Step 301: A second operation is performed according to the second information,
where the second operation includes at least one of:
performing a related operation of sending paging cause capability information of a network,
performing a related operation of a paging cause for the terminal,
a paging message containing related information for indicating a paging cause or a first paging record list, or a paging message not containing related information for indicating a paging cause or a first paging record list,
and a paging message only containing paging information related to terminals registered on a same network,
where
the first indication information is used for indicating one of: the terminal being in a multi-USIM mode, and the terminal being in a non-multi-USIM mode;
the third indication information is used for indicating one of: requiring to perform a related operation of a paging cause for the terminal, and not requiring to perform a related operation of a paging cause for the terminal;
the paging cause capability information of a network is used for indicating one of: the network supporting the paging cause function, and the network not supporting the paging cause function;
and the paging cause capability information of the terminal is used for indicating one of: the terminal supporting the paging cause function, and the terminal not supporting the paging cause function.

Optionally, the second communication device may be at least one of: a network element of an RAN, and a network element of a CN.

In a case that the second communication device is a network element of an RAN, the paging message is a paging message of a Uu port. In a case that the second communication device is a network element of a CN, the paging message is a notification message in NAS signaling. The communication message can be sent through non-3rd generation partnership project (3rd Generation Partnership Project, 3GPP) connection between the terminal and the CN.

In an implementation, a second communication device (such as a network element of an RAN) can receive second information from a network element of a CN. Optionally, the paging cause capability information of a network, received from a CN, is paging cause capability information of the CN.

In another implementation, second information, such as paging cause capability information of the terminal, is received from the terminal. Optionally, the paging cause capability information of the terminal is an RRC capability.

Optionally, the performing a related operation of a paging cause for the terminal includes at least one of:
sending a paging message related to the terminal;
determining the type of data, the data including at least one of: data of triggering paging of the terminal, received or generated data related to the terminal, downlink data of the terminal, and data corresponding to downlink data notification of the terminal;
performing an operation of determining a paging cause of the terminal;
performing a related operation in a case that the paging cause is a first value;
performing a related operation in a case that the paging cause is a second value;
performing a related operation in a case that the paging cause is unknown;
the paging message containing information for indicating a cause for paging the terminal; or the paging message not containing information for indicating a cause for paging the terminal;
in a case that the type of data is a first value and a second value, the paging message containing information for indicating that the cause for paging the terminal is the first value and the second value;
and in a case that the type of data is a first value and a second value, the paging message containing information for indicating that the cause for paging the terminal is the first value.

Optionally, the performing a related operation in a case that the paging cause is a first value includes at least one of:
the paging message containing information for indicating that the cause for paging the terminal is a first value;
the paging message containing information for indicating a cause for paging the terminal;
and in a case that the type of data is more than one first value, the paging message containing information for indicating that the cause for paging the terminal is the plurality of first values,
where the data includes at least one of: data of triggering paging of the terminal, received or generated data related to the terminal, downlink data of the terminal, and data corresponding to downlink data notification of the terminal.

Optionally, the performing a related operation in a case that the paging cause is a first value includes: in a case that a fourth condition is met, performing a related operation in a case that the paging cause is a first value,
where the fourth condition includes at least one of:
the paging request sent by a CN and related to a terminal containing information for indicating a first value;
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a first value or the type of data is a first value,
where the data includes at least one of: data of triggering paging of the terminal, received or generated data related to the terminal, downlink data of the terminal, and data corresponding to downlink data notification of the terminal.

In an implementation, in a case that the paging message is CN paging, the fourth condition includes at least one of: the paging request sent by a CN and related to a terminal containing information for indicating a first value; the first network supporting the paging cause function; and the terminal supporting the paging cause function.

In another implementation, in a case that the paging message is RAN paging or the terminal is in an inactive state, the fourth condition includes at least one of:
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a first value.

Optionally, the determining that the paging cause of the terminal is a first value includes: the type of data being a first value.

In an implementation, the type of data being a first value includes at least one of: the header of data containing information for indicating a first value (such as a paging policy indicator (Paging Policy Indicator, PPI) value for indicating a voice), and the quality of service (Quality of Service, QoS) information to which the data belongs being related to a first value (such as QoS class identifier (QoS Class Identifier, QCI)=1 or 5).

Optionally, the performing a related operation in a case that the paging cause is a second value includes at least one of:
the paging message containing information for indicating that the cause for paging the terminal is a second value;
and the paging message not containing information for indicating a cause for paging the terminal.

Optionally, the performing a related operation in a case that the paging cause is a second value includes: in a case that a fifth condition is met, performing a related operation in a case that the paging cause is a second value,
where the fifth condition includes at least one of:
the paging request sent by a CN and related to a terminal not containing information for indicating a first value or containing information for indicating a second value;
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a second value or the type of data is not a first value or is a second value,
where the data includes at least one of: data of triggering paging of the terminal, received or generated data related to the terminal, downlink data of the terminal, and data corresponding to downlink data notification of the terminal.

In an implementation, in a case that the paging message is CN paging, the fifth condition includes at least one of:
the paging request sent by a CN and related to a terminal not containing information for indicating a first value or containing information for indicating a second value;
the first network supporting the paging cause function;
the terminal supporting the paging cause function;
the first indication information indicating that the terminal is in a multi-USIM mode;
and the third indication information indicating that it is required to perform a related operation of a paging cause for the terminal.

In another implementation, in a case that the paging message is RAN paging, the fifth condition includes at least one of:
the first network supporting the paging cause function;
the terminal supporting the paging cause function;
the first indication information indicating that the terminal is in a multi-USIM mode;
the first indication information indicating that the terminal is in a multi-USIM mode;
the third indication information indicating that it is required to perform a related operation of a paging cause for the terminal;
and determining that the paging cause of the terminal is a second value.

Optionally, the determining that the paging cause of the terminal is a second value includes: the type of data being not a first value or being a second value.

In an implementation, the type of data being not a first value or being a second value includes at least one of: the header of data not containing information for indicating a first value (such as a PPI value for indicating a voice), the header of data containing information for indicating a second value, and the QoS information to which the data belongs being not related to a first value.

Optionally, the performing a related operation in a case that the paging cause is unknown includes at least one of:
the paging message not containing information for indicating that the cause for paging the terminal is a first value;
the paging message not containing information for indicating that the cause for paging the terminal is a second value;
and the paging message not containing information for indicating a cause for paging the terminal.

Optionally, the performing a related operation in a case that the paging cause is unknown includes: in a case that a sixth condition is met, performing a related operation in a case that the paging cause is unknown,
where the sixth condition includes at least one of:
the paging request sent by a CN and related to a terminal not containing information for indicating a first value;
the paging request sent by a CN and related to a terminal not containing information for indicating a second value;
the paging request sent by a CN and related to a terminal not containing at least one of: first indication information, third indication information, and paging cause capability information of a network;
the first network not supporting the paging cause function, or not obtaining paging cause capability information of a network;
the terminal supporting the paging cause function, or not obtaining paging cause capability information of the terminal;
the first indication information indicating that the terminal is in a non-multi-USIM mode, or not obtaining the first indication information;
and the third indication information indicating that it is not required to perform a related operation of a paging cause for the terminal, or not obtaining the third indication information.

Optionally, the performing an operation of determining a paging cause of the terminal includes: determining a paging cause of the terminal according to at least one of the type of data, the paging request sent by a CN, the paging initiated by an RAN, and the paging cause capability information of a network,
where
the data includes at least one of: data of triggering paging of the terminal, received or generated data related to the terminal, downlink data of the terminal, and data corresponding to downlink data notification of the terminal.

The determining a paging cause of the terminal according to at least one of the type of data, the paging request sent by a CN, the paging initiated by an RAN, and the paging cause capability information of a network includes at least one of:
in a case that the paging request contains paging cause related information, determining that the paging cause is a paging cause indicated by the paging cause related information;
in a case that the paging request contains related information for indicating a first value, determining that the paging cause is the first value;
in a case that the paging request contains related information for indicating a second value, determining that the paging cause is a first value;
in a case that the paging request does not contain paging cause related information, but contains at least one of first indication information, third indication information, and paging cause function capability information of a network, determining that the paging cause is a second value;
in a case that the paging request does not contain paging cause related information, but it is determined that a network supports a paging cause function, determining that the paging cause is a second value;
in a case that the type of data is a first value or the header of data contains information for indicating a first value, determining that the paging cause is the first value;
in a case that the type of data is a second value, the header of data contains information for indicating a second value, or the header of data does not contain information for indicating a first value, determining that the paging cause is the second value;
in a case that the QoS information of data is related to a first value (such as QCI=1 or 5), determining that the paging cause is the first value;
in a case that the QoS information of data is not related to a first value, determining that the paging cause is a second value;
in a case that the data is NAS data, determining that the paging cause is a second value;
in a case that the data is data generated by a second communication device, determining that the paging cause is a second value;
and for paging initiated by an RAN and related to a terminal that is not triggered by data received from the terminal, determining that the paging cause is a second value.

In an implementation, the paging initiated by an RAN and related to a terminal that is not triggered by data received from the terminal includes paging triggered by system message change.

Optionally, the performing an operation of determining a paging cause of the terminal includes: in a case that a seventh condition is met, performing an operation of determining a paging cause of the terminal,
where the seventh condition includes at least one of:
the first network supporting the paging cause function;
and the terminal meeting at least one of: the terminal supporting the paging cause function, the first indication information related to the terminal indicating that the terminal is in a multi-USIM mode, the third indication information related to the terminal indicating that it is required to perform a related operation of a paging cause for the terminal, and the terminal being in an inactive state or an idle state.

In an implementation, the second communication device is a network element of an RAN, and only for a terminal in an inactive state, a paging cause of the terminal is determined according to the type of data.

In another implementation, the second communication device is a network element of an RAN, and only for a terminal in an idle state, a paging cause of the terminal is determined according to the paging request sent by a CN.

Optionally, the paging message containing information for indicating a cause for paging the terminal includes: in a case that an eighth condition is met, the paging message containing information for indicating a cause for paging the terminal,
where the eighth condition includes at least one of:
the first network supporting the paging cause function,
and the terminal meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
   and/or
the paging message not containing information for indicating a cause for paging the terminal includes: in a case that a ninth condition is met, the paging message not containing information for indicating a cause for paging the terminal,
where the ninth condition includes at least one of:
   the first network not supporting the paging cause function, or not obtaining paging cause capability information of a network,
   and the terminal meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

Optionally, the performing an operation of the paging message containing related information for indicating a paging cause or a first paging record list includes: in a case that a tenth condition is met, performing an operation of the paging message containing related information for indicating a paging cause or a first paging record list,
where the tenth condition includes at least one of:
the first network supporting the paging cause function,
the second communication device supporting the paging cause function,
and at least one terminal in the paging message meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
   and/or
the performing an operation of the paging message not containing related information for indicating a paging cause or a first paging record list includes: in a case that an eleventh condition is met, performing an operation of the paging message not containing related information for indicating a paging cause or a first paging record list,
where the eleventh condition includes at least one of:
   the first network not supporting the paging cause function, or not obtaining paging cause capability information of a network,
   the second communication device not supporting the paging cause function,
   and any terminal in the paging message meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

In an implementation, the first network supporting a paging cause function includes at least one of: a CN of the first network supporting a paging cause function, and an RAN of the first network supporting a paging cause function.

In an implementation, the first network not supporting a paging cause function includes at least one of: a CN of the first network not supporting a paging cause function, and an RAN of the first network not supporting a paging cause function.

In an implementation, according to the paging message not containing related information for indicating a paging cause or a first paging record list, it is determined that the first network or a network element of an RAN of the first network does not support paging cause related information.

In an implementation, in a case that an RAN of the first network supports the paging cause function or the second communication device supports the paging cause function, an operation of the paging message containing related information for indicating a paging cause or a first paging record list is performed.

It is not difficult to understand that even if a CN of the first network does not support the paging cause function, in a case that an RAN of the first network supports the paging cause function or the second communication device supports the paging cause function, an operation of the paging message containing related information for indicating a paging cause or a first paging record list is performed.

Optionally, the performing a related operation of sending paging cause capability information of a network includes: in a case that a twelfth condition is met, performing a related operation of sending paging cause capability information of a network,
where the twelfth condition includes at least one of:
the paging cause capability information of a network, obtained from a network element of a CN, indicating the support of a paging cause function, or the CN supporting a paging cause function,
and a network element of an RAN supporting a paging cause function;
and the performing a related operation of sending paging cause capability information of a network includes at least one of:
   broadcasting paging cause capability information of a network,
   the paging cause capability information of a network being paging cause capability information of each network supported by an RAN or a cell,
   and the paging message containing paging cause capability information of a network.

In an implementation, in the case of RAN or cell sharing, the paging cause capability information of a network is paging cause capability information of each network supported by the RAN or the cell.

Optionally, the performing an operation of the paging message only containing paging information related to terminals registered on a same network includes: in a case that a thirteenth condition is met, performing an operation of the paging message only containing paging information related to terminals registered on a same network,
where the thirteenth condition includes at least one of:
a CN of the first network and/or an RAN of the first network supporting a paging cause function,
and a second communication device supporting a paging cause function.

The information processing method provided in this embodiment of this application can support the terminal to determine a paging cause and distinguish whether the paging cause is a second value or the paging cause is unknown.

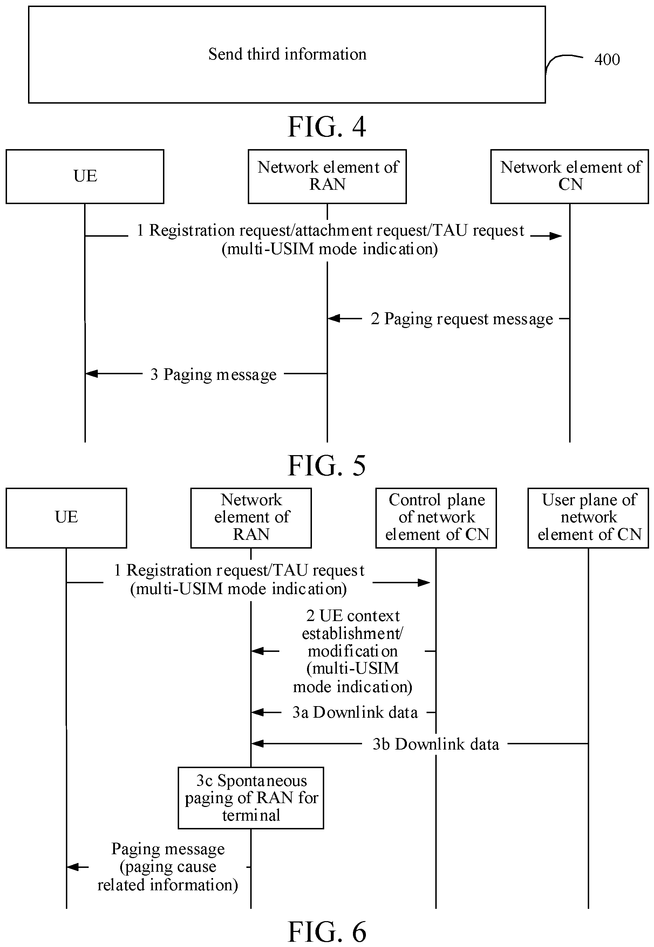

Referring to FIG. 4, an embodiment of this application provides still another information processing method. An executive body of the method is a fourth communication device. The second communication device may be a communication device of the first network, including one of: a network element of a CN (such as an AMF or an MME), and a network element of an RAN. As shown in FIG. 4, the method includes the following steps:

Step 400: Third information is sent, the third information including at least one of: first indication information and third indication information,
where
the first indication information is used for indicating one of: the terminal being in a multi-USIM mode, and the terminal being in a non-multi-USIM mode;
and the third indication information is used for indicating one of: requiring to perform a related operation of a paging cause for the terminal, and not requiring to perform a related operation of a paging cause for the terminal.

Optionally, the third information is sent to an RAN or a second communication device.

Optionally, the operation of sending the third information to an RAN or a second communication device includes: in a case that a fourteenth condition is met, sending the third information to a network element of the RAN or the second communication device, where the third information includes at least one of: first indication information and third indication information, the first indication information indicating that the terminal is in a multi-USIM mode, and the third indication information indicating that it is required to perform a related operation of a paging cause for the terminal,
where the fourteenth condition includes at least one of:
the first indication information obtained from the terminal indicating multi-USIM mode indication information,
the CN supporting a paging cause function,
and the terminal supporting a paging cause function.

Optionally, the sending the third information to an RAN or a second communication device includes at least one of:
sending the third information to the RAN through context-dependent messages of UE;
   and/or
a paging request message initiated by a CN containing the third information.

In an implementation, the third information is sent to the RAN through context-dependent messages of UE.

In another implementation, the paging request message initiated by a CN is a paging request sent from a network element of the CN to a network element of an RAN and related to a terminal.

Optionally, the operation of the paging request message initiated by a CN containing the third information includes: in a case that a fifteenth condition is met, the paging request message initiated by a CN containing the third information,
where the fifteenth condition includes at least one of:
the type of data being a second value, or determining that the paging cause is a second value,
the first indication information obtained from the terminal indicating that the terminal is in a multi-USIM mode,
the CN supporting a paging cause function,
and the terminal supporting a paging cause function,
where the data includes at least one of: data of triggering paging of the terminal, received or generated data related to the terminal, downlink data of the terminal, and data corresponding to downlink data notification of the terminal.

The information processing method provided in this embodiment of this application can support the terminal to determine a paging cause and distinguish whether the paging cause is a second value or the paging cause is unknown.

FIG. 5 is a schematic flowchart of an information processing method provided in yet another embodiment of this application. The information processing method includes the following steps:
Step 1: The terminal sends a registration request, an attachment request or a TAU request to a network element of a CN of the first network (such as an AMF or an MME), and the request contains first indication information. The first indication information is used for indicating one of: the terminal being in a multi-USIM mode, and the terminal being in a non-multi-USIM mode.
   Subsequently, the terminal enters an idle state, and related steps are omitted.
Step 2: In a case that the terminal needs to be paged, the network element of the CN sends a paging request message related to the terminal to a network element of an RAN, which is specifically described in the embodiment in FIG. 4.

Exemplarily,
in the case of determining that the paging cause is a first value (such as a voice), the paging request message contains related information of the first value.

In a case that a condition is met, the paging request message contains at least one of: first indication information and second indication information.

The condition includes at least one of:
the type of data of triggering paging being a second value (such as a non voice), or determining that the paging cause is a second value (such as a non voice);
the first indication information indicating that the terminal is in a multi-USIM mode;
the terminal requesting a paging cause;
and the CN supporting a paging cause function.

Step 3: According to the information in the paging request, the RAN sends a paging message related to the terminal.

The network element of the RAN performs a second operation according to second information, which is specifically described in the embodiment in FIG. 3.

Exemplarily, in a case that the paging request message contains information for indicating a first value, the paging message contains information for indicating a first value.

Exemplarily, in a case that the paging request message contains first indication information and/or second indication information, the paging message contains information for indicating a second value.

Step 4: When receiving the paging message sent by the network element of the RAN of the first network, the terminal performs a first operation according to the first information, which is specifically described in the embodiment in FIG. 2, and will not be repeated here.

The operations and information involved in the above steps can refer to the information processing methods in the embodiments in FIG. 2, FIG. 3 and FIG. 4, which will not be repeated here.

FIG. 6 is a schematic flowchart of an information processing method provided in still yet another embodiment of this application. The information processing method includes the following steps:

Step 1: The terminal sends a registration request, an attachment request or a TAU request to a network element of a CN of the first network (such as an AMF or an MME), and the request contains first indication information. The first indication information is used for indicating one of: the terminal being in a multi-USIM mode, and the terminal being in a non-multi-USIM mode.

Step 2: The network element of the CN sends third information to a network element of an RAN, which is specifically described in the embodiment in FIG. 4.

Subsequently, the terminal enters an inactive state.

Steps 3a, 3b and 3c: The network element of the RAN receives the control plane data and user plane data related to the terminal, and/or the network element of the RAN initiates paging to the terminal.

In the case of determining that the terminal needs to be paged, the network element of the RAN performs a second operation according to second information, which is specifically described in the embodiment in FIG. 3, and will not be repeated here.

Step 4: When receiving the paging message sent by the network element of the RAN of the first network, the terminal performs a first operation according to the first information, which is specifically described in the embodiment in FIG. 2, and will not be repeated here.

The operations and information involved in the above steps can refer to the information processing methods in the embodiments in FIG. 2, FIG. 3 and FIG. 4, which will not be repeated here.

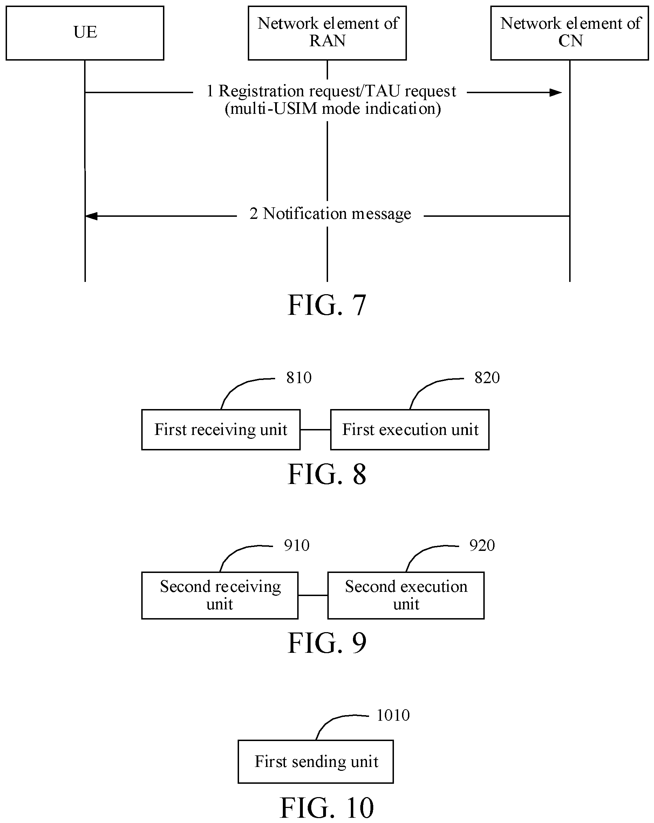

FIG. 7 is a schematic flowchart of an information processing method provided in a further embodiment of this application. The information processing method includes the following steps:
Step 1: The terminal sends a registration request, an attachment request or a TAU request to a network element of a CN of the first network (such as an AMF or an MME), and the request contains first indication information. The first indication information is used for indicating one of: the terminal being in a multi-USIM mode, and the terminal being in a non-multi-USIM mode.
   Subsequently, the terminal enters an idle state, and related steps are omitted.
Step 2: In a case that the terminal needs to be paged, the network element of the CN sends a notification message to the terminal. The CN can send a notification message related to the 3GPP access of the terminal to the terminal through non-3GPP connection. The specific details are described in the embodiment in FIG. 3.

Exemplarily,
in the case of determining that the paging cause is a first value (such as a voice), the notification message contains related information of the first value.

In a case that a condition is met, the notification message contains at least one of: first indication information and second indication information.

The condition includes at least one of:
the type of data of triggering paging being a second value (such as a non voice), or determining that the paging cause is a second value (such as a non voice);
the first indication information indicating that the terminal is in a multi-USIM mode;
the terminal requesting a paging cause;
and the CN supporting a paging cause function.

When receiving the notification message sent by the network element of the CN of the first network, the terminal performs a first operation according to the first information, which is specifically described in the embodiment in FIG. 2, and will not be repeated here.

The operations and information involved in the above steps can refer to the information processing methods in the embodiments in FIG. 2, FIG. 3 and FIG. 4, which will not be repeated here.

FIG. 8 is a schematic structural view of an information processing apparatus provided in an embodiment of this application. The information processing apparatus includes: a first obtaining unit 810, configured to obtain first information, the first information including at least one of: paging cause capability information of a network, a paging message received from a first network and related to a terminal, first indication information, second indication information, and paging cause capability information of the terminal;
and a first execution unit 820, configured to perform a first operation according to the first information,
where the first operation includes at least one of: performing an operation of determining a paging cause or not performing an operation of determining a paging cause, determining that the first network supports a paging cause function or determining that the first network does not support a paging cause function, and an AS of the terminal sending a determined paging cause value to an NAS of the terminal,
where
   the paging cause capability information of a network is used for indicating one of: the network supporting the paging cause function, and the network not supporting the paging cause function;
   the paging cause capability information of the terminal is used for indicating one of: the terminal supporting the paging cause function, and the terminal not supporting the paging cause function;
   the first indication information is used for indicating one of: the terminal being in a multi-USIM mode, and the terminal being in a non-multi-USIM mode;
   and the second indication information is used for indicating one of: requiring to perform an operation of determining a paging cause, and not requiring to perform an operation of determining a paging cause.

Optionally, the operation of determining a paging cause includes at least one of: determining that the paging cause is a first value, determining that the paging cause is a second value, and determining that the paging cause is unknown,
where
the first value includes at least one of: a voice, a short message, IMS signaling, control plane signaling, and system message change;
the second value includes one of: a non voice, other values except the value range of the first value, and other paging causes that trigger paging except the value range of the first value;
and the value range of the first value includes at least one of: a voice, a short message, IMS signaling, and control plane signaling.

Optionally, the first value is one or more values within the value range of the first value.

Example 1: The value range of the first value may include X, Y, and Z, and then, the second value may be any other paging causes that trigger paging except X, Y, and Z.
(1) In an implementation, the cause for triggering paging or the type of data of triggering paging is X, and then, the first value is X.
(2) In another implementation, the cause for triggering paging or the type of data of triggering paging is X and Y, and then, the first value is X and Y.
(3) In still another implementation, the cause for triggering paging or the type of data of triggering paging is A, and then, the cause for triggering paging is the second value.

Example 2: The value range of the first value may be X, and then, the second value may be not X.
(1) In an implementation, the cause for triggering paging or the type of data of triggering paging is X, and then, the first value received by the terminal is X.
(2) In another implementation, the cause for triggering paging or the type of data of triggering paging is X and Y, and then, the paging cause is one of: the first value (namely X), and the first value and/or the second value.
(3) In still another implementation, the cause for triggering paging or the type of data of triggering paging is Y, and then, the paging cause is the second value.

Optionally, the operation of determining that the paging cause is a first value includes: in a case that a first condition is met, determining that the paging cause is a first value,
where the first condition includes at least one of:
the paging message containing information for indicating that the cause for paging the terminal is a first value;
and the terminal being in a multi-USIM mode.

Optionally, the operation of determining that the paging cause is a second value includes: in a case that a second condition is met, determining that the paging cause is a second value,
where the second condition includes at least one of:
the first network supporting a paging cause function;
the paging message not containing paging cause related information related to the terminal;
the paging message not containing information for indicating that the cause for paging the terminal is a first value;
the paging message containing information for indicating that the cause for paging the terminal is a second value;
the first network supporting a paging cause function;
the terminal supporting a paging cause function;
and the terminal being in a multi-USIM mode.

In an implementation, the second condition includes at least one of: the first network supporting a paging cause function; the terminal being in a multi-USIM mode; and the paging message not containing paging cause related information related to the terminal, or the paging message not containing information for indicating that the cause for paging the terminal is a first value.

It is not difficult to understand that in this implementation, the first network can only display the paging cause related information related to the terminal in the paging message when the paging cause of the terminal is a first value. Therefore, in a case that the paging message does not contain the paging cause related information related to the terminal, the terminal can determine that the paging cause is a second value according to the first network supporting a paging cause function.

In another implementation, the second condition includes: the paging message containing information for indicating that the cause for paging the terminal is a second value.

Optionally, the operation of determining that the paging cause is unknown or the condition of not performing an operation of determining a paging cause includes: in a case that a third condition is met, performing at least one of: determining that the paging cause is unknown, and not performing an operation of determining a paging cause,
where the third condition includes at least one of:
the first network not supporting a paging cause function;
the paging message not containing related information for indicating a paging cause or a first paging record list;
the paging message not containing information for indicating that the cause for paging the terminal is a first value;
the paging message not containing information for indicating that the cause for paging the terminal is a second value;
the terminal not supporting a paging cause function;
and the terminal being in a non-multi-USIM mode.

In an implementation, the first network supporting a paging cause function includes at least one of: a network element of a CN of the first network supporting a paging cause function, and a network element of an RAN of the first network supporting a paging cause function.

In an implementation, the first network not supporting a paging cause function includes at least one of: a network element of a CN of the first network not supporting a paging cause function, and a network element of an RAN of the first network not supporting a paging cause function.

In an implementation, according to the paging message not containing related information for indicating a paging cause or a first paging record list, it is determined that the first network or a network element of an RAN of the first network does not support paging cause related information.

Optionally, the first network supporting a paging cause function includes: determining that the first network supports a paging cause function according to at least one of:
obtaining paging cause capability information of a network from the first network;
the paging cause capability information of a network indicating that the network supports the paging cause function;
and the paging message containing information related to a paging cause.

Optionally, the obtaining paging cause capability information of a network includes: obtaining the paging cause capability information of a network from at least one of a network element of a CN of the first network and/or a network element of an RAN of the first network;
and/or
the obtaining first indication information and/or second indication information includes: the AS of the terminal obtains first indication information and/or second indication information from the NAS of the terminal.

Optionally, the paging cause capability information of a network includes at least one of:
paging cause capability information of each network supported by a cell or an RAN;
and paging cause capability information for each area.

In an implementation, the area may be one of: a registration area of the terminal, a location area of the terminal, and an area specified in a TAI List configured by the network for the terminal.

Optionally, the paging cause capability information of a network includes at least one of: paging cause capability information of a CN, and paging cause capability information of an RAN,
where
the paging cause capability information of a CN is used for indicating one of: the CN supporting the paging cause function, and the CN not supporting the paging cause function;
and the paging cause capability information of an RAN is used for indicating one of: the RAN supporting the paging cause function, and the RAN not supporting the paging cause function.

In an implementation, paging cause capability information of a network is received from an SIB broadcast of a cell of an RAN of the first network.

In an implementation, paging cause capability information of a network is received from a network element of a CN of the first network. The paging cause capability information of a network may distinguish a registration area (such as a TA List);
and/or
the determining that the first network supports a paging cause function includes: in a case that a sixteenth condition is met, determining that the first network supports a paging cause function,
where the sixteenth condition includes at least one of:
   the paging cause capability information of a network indicating at least one of: the first network supporting a paging cause function, the network element of the CN of the first network supporting a paging cause function, and the network element of the RAN of the first network supporting a paging cause function,
   and the paging message containing related information for indicating a paging cause or a first paging record list;
      and/or
   the determining that the first network does not support a paging cause function includes: in a case that a seventeenth condition is met, determining that the first network does not support a paging cause function,
   where the seventeenth condition includes at least one of:
      the paging cause capability information of a network indicating at least one of: the first network not supporting a paging cause function, the network element of the CN of the first network not supporting a paging cause function, and the network element of the RAN of the first network not supporting a paging cause function,
      and the paging message not containing related information for indicating a paging cause or a first paging record list.

The information processing apparatus in these embodiments of this application may be an apparatus, or a component, an integrated circuit or a chip in a terminal. The apparatus may be a mobile electronic device or a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, or a personal digital assistant (personal digital assistant, PDA); and the non-mobile electronic device may be a server, a network attached storage (Network Attached Storage, NAS), a personal computer (personal computer, PC), a television (television, TV), a teller machine, or a self-service machine, which is not specifically limited in these embodiments of this application.

The information processing apparatus in these embodiments of this application may be an apparatus with an operating system. The operating system may be an Android (Android) operating system, an ios operating system, or another possible operating system, which is not specifically limited in these embodiments of this application.

The information processing apparatus provided in this embodiment of this application can implement the processes implemented by the information processing method in the method embodiment in FIG. 2. To avoid repetition, details are not described herein again.

The information processing apparatus provided in this embodiment of this application can support the terminal to determine a paging cause and distinguish whether the paging cause is a second value or the paging cause is unknown.

FIG. 9 is a schematic structural view of an information processing apparatus provided in another embodiment of this application. The information processing apparatus includes:
a second obtaining unit 910, configured to obtain second information, the second information including at least one of: paging cause capability information of a network, a paging request sent by a CN and related to a terminal, first indication information, third indication information, and paging cause capability information of the terminal,
and a second execution unit 920, configured to perform a second operation according to the second information, where the second operation includes at least one of:
   performing a related operation of sending paging cause capability information of a network,
   performing a related operation of a paging cause for the terminal,
   a paging message containing related information for indicating a paging cause or a first paging record list, or a paging message not containing related information for indicating a paging cause or a first paging record list,
   and a paging message only containing paging information related to terminals registered on a same network,
   where
   the first indication information is used for indicating one of: the terminal being in a multi-USIM mode, and the terminal being in a non-multi-USIM mode;
   the third indication information is used for indicating one of: requiring to perform a related operation of a paging cause for the terminal, and not requiring to perform a related operation of a paging cause for the terminal;
   the paging cause capability information of a network is used for indicating one of: the network supporting the paging cause function, and the network not supporting the paging cause function;
   and the paging cause capability information of the terminal is used for indicating one of: the terminal supporting the paging cause function, and the terminal not supporting the paging cause function.

Optionally, the performing a related operation of a paging cause for the terminal includes at least one of:
sending a paging message related to the terminal;
determining the type of data, the data including at least one of: data of triggering paging of the terminal, received or generated data related to the terminal, downlink data of the terminal, and data corresponding to downlink data notification of the terminal;
performing an operation of determining a paging cause of the terminal;
performing a related operation in a case that the paging cause is a first value;
performing a related operation in a case that the paging cause is a second value;
performing a related operation in a case that the paging cause is unknown;
the paging message containing information for indicating a cause for paging the terminal; or the paging message not containing information for indicating a cause for paging the terminal;
in a case that the type of data is a first value and a second value, the paging message containing information for indicating that the cause for paging the terminal is the first value and the second value;
and in a case that the type of data is a first value and a second value, the paging message containing information for indicating that the cause for paging the terminal is the first value.

Optionally, the performing a related operation in a case that the paging cause is a first value includes at least one of:
the paging message containing information for indicating that the cause for paging the terminal is a first value;
the paging message containing information for indicating a cause for paging the terminal;
and in a case that the type of data is more than one first value, the paging message containing information for indicating that the cause for paging the terminal is the plurality of first values,
where the data includes at least one of: data of triggering paging of the terminal, received or generated data related to the terminal, downlink data of the terminal, and data corresponding to downlink data notification of the terminal.

Optionally, the performing a related operation in a case that the paging cause is a first value includes: in a case that a fourth condition is met, performing a related operation in a case that the paging cause is a first value,
where the fourth condition includes at least one of:
the paging request sent by a CN and related to a terminal containing information for indicating a first value;
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a first value or the type of data is a first value,
where the data includes at least one of: data of triggering paging of the terminal, received or generated data related to the terminal, downlink data of the terminal, and data corresponding to downlink data notification of the terminal.

In an implementation, in a case that the paging message is CN paging, the fourth condition includes at least one of: the paging request sent by a CN and related to a terminal containing information for indicating a first value; the first network supporting the paging cause function; and the terminal supporting the paging cause function.

In another implementation, in a case that the paging message is RAN paging or the terminal is in an inactive state, the fourth condition includes at least one of:
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a first value.

Optionally, the determining that the paging cause of the terminal is a first value includes: the type of data being a first value.

In an implementation, the type of data being a first value includes at least one of: the header of data containing information for indicating a first value (such as a PPI value for indicating a voice), and the QoS information to which the data belongs being related to a first value (such as QCI=1 or 5).

Optionally, the performing a related operation in a case that the paging cause is a second value includes at least one of:
the paging message containing information for indicating that the cause for paging the terminal is a second value;
and the paging message not containing information for indicating a cause for paging the terminal.

Optionally, the performing a related operation in a case that the paging cause is a second value includes: in a case that a fifth condition is met, performing a related operation in a case that the paging cause is a second value,
where the fifth condition includes at least one of:
the paging request sent by a CN and related to a terminal not containing information for indicating a first value or containing information for indicating a second value;
the first network supporting the paging cause function;
the terminal supporting the paging cause function;
the first indication information indicating that the terminal is in a multi-USIM mode;
the third indication information indicating that it is required to perform a related operation of a paging cause for the terminal;
and determining that the paging cause of the terminal is a second value or the type of data is not a first value or is a second value,
where the data includes at least one of: data of triggering paging of the terminal, received or generated data related to the terminal, downlink data of the terminal, and data corresponding to downlink data notification of the terminal.

In an implementation, in a case that the paging message is CN paging, the fifth condition includes at least one of:
the paging request sent by a CN and related to a terminal not containing information for indicating a first value or containing information for indicating a second value;
the first network supporting the paging cause function;
the terminal supporting the paging cause function;
the first indication information indicating that the terminal is in a multi-USIM mode;
and the third indication information indicating that it is required to perform a related operation of a paging cause for the terminal.

In another implementation, in a case that the paging message is RAN paging, the fifth condition includes at least one of:
the first network supporting the paging cause function;
the terminal supporting the paging cause function;
the first indication information indicating that the terminal is in a multi-USIM mode;
the first indication information indicating that the terminal is in a multi-USIM mode;
the third indication information indicating that it is required to perform a related operation of a paging cause for the terminal;
and determining that the paging cause of the terminal is a second value.

Optionally, the determining that the paging cause of the terminal is a second value includes: the type of data being not a first value or being a second value.

In an implementation, the type of data being not a first value or being a second value includes at least one of: the header of data not containing information for indicating a first value (such as a PPI value for indicating a voice), the header of data containing information for indicating a second value, and the QoS information to which the data belongs being not related to a first value.

Optionally, the performing a related operation in a case that the paging cause is unknown includes at least one of:
the paging message not containing information for indicating that the cause for paging the terminal is a first value;
the paging message not containing information for indicating that the cause for paging the terminal is a second value;
and the paging message not containing information for indicating a cause for paging the terminal.

Optionally, the performing a related operation in a case that the paging cause is unknown includes: in a case that a sixth condition is met, performing a related operation in a case that the paging cause is unknown,
where the sixth condition includes at least one of:
the paging request sent by a CN and related to a terminal not containing information for indicating a first value;
the paging request sent by a CN and related to a terminal not containing information for indicating a second value;
the paging request sent by a CN and related to a terminal not containing at least one of: first indication information, third indication information, and paging cause capability information of a network;
the first network not supporting the paging cause function, or not obtaining paging cause capability information of a network;
the terminal supporting the paging cause function, or not obtaining paging cause capability information of the terminal;
the first indication information indicating that the terminal is in a non-multi-USIM mode, or not obtaining the first indication information;
and the third indication information indicating that it is not required to perform a related operation of a paging cause for the terminal, or not obtaining the third indication information.

Optionally, the performing an operation of determining a paging cause of the terminal includes: determining a paging cause of the terminal according to at least one of the type of data, the paging request sent by a CN, the paging initiated by an RAN, and the paging cause capability information of a network,
where
the data includes at least one of: data of triggering paging of the terminal, received or generated data related to the terminal, downlink data of the terminal, and data corresponding to downlink data notification of the terminal.

The determining a paging cause of the terminal according to at least one of the type of data, the paging request sent by a CN, the paging initiated by an RAN, and the paging cause capability information of a network includes at least one of:
in a case that the paging request contains paging cause related information, determining that the paging cause is a paging cause indicated by the paging cause related information;
in a case that the paging request contains related information for indicating a first value, determining that the paging cause is the first value;
in a case that the paging request contains related information for indicating a second value, determining that the paging cause is a first value;
in a case that the paging request does not contain paging cause related information, but contains at least one of first indication information, third indication information, and paging cause function capability information of a network, determining that the paging cause is a second value;
in a case that the paging request does not contain paging cause related information, but it is determined that a network supports a paging cause function, determining that the paging cause is a second value;
in a case that the type of data is a first value or the header of data contains information for indicating a first value, determining that the paging cause is the first value;
in a case that the type of data is a second value, the header of data contains information for indicating a second value, or the header of data does not contain information for indicating a first value, determining that the paging cause is the second value;
in a case that the QoS information of data is related to a first value (such as QCI=1 or 5), determining that the paging cause is the first value;
in a case that the QoS information of data is not related to a first value, determining that the paging cause is a second value;
in a case that the data is NAS data, determining that the paging cause is a second value;
in a case that the data is data generated by a second communication device, determining that the paging cause is a second value;
and for paging initiated by an RAN and related to a terminal that is not triggered by data received from the terminal, determining that the paging cause is a second value.

In an implementation, the paging initiated by an RAN and related to a terminal that is not triggered by data received from the terminal includes paging triggered by system message change.

Optionally, the performing an operation of determining a paging cause of the terminal includes: in a case that a seventh condition is met, performing an operation of determining a paging cause of the terminal,
where the seventh condition includes at least one of:
the first network supporting the paging cause function;
and the terminal meeting at least one of: the terminal supporting the paging cause function, the first indication information related to the terminal indicating that the terminal is in a multi-USIM mode, the third indication information related to the terminal indicating that it is required to perform a related operation of a paging cause for the terminal, and the terminal being in an inactive state or an idle state.

In an implementation, the second communication device is a network element of an RAN, and only for a terminal in an inactive state, a paging cause of the terminal is determined according to the type of data.

In another implementation, the second communication device is a network element of an RAN, and only for a terminal in an idle state, a paging cause of the terminal is determined according to the paging request sent by a CN.

Optionally, the paging message containing information for indicating a cause for paging the terminal includes: in a case that an eighth condition is met, the paging message containing information for indicating a cause for paging the terminal,
where the eighth condition includes at least one of:
the first network supporting the paging cause function,
and the terminal meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
   and/or
the paging message not containing information for indicating a cause for paging the terminal includes: in a case that a ninth condition is met, the paging message not containing information for indicating a cause for paging the terminal,
where the ninth condition includes at least one of:
   the first network not supporting the paging cause function, or not obtaining paging cause capability information of a network,
   and the terminal meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

Optionally, the performing an operation of the paging message containing related information for indicating a paging cause or a first paging record list includes: in a case that a tenth condition is met, performing an operation of the paging message containing related information for indicating a paging cause or a first paging record list,
where the tenth condition includes at least one of:
the first network supporting the paging cause function,
the second communication device supporting the paging cause function,
and at least one terminal in the paging message meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
   and/or
the performing an operation of the paging message not containing related information for indicating a paging cause or a first paging record list includes: in a case that an eleventh condition is met, performing an operation of the paging message not containing related information for indicating a paging cause or a first paging record list,
where the eleventh condition includes at least one of:
   the first network not supporting the paging cause function, or not obtaining paging cause capability information of a network,
   the second communication device not supporting the paging cause function,
   and any terminal in the paging message meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

In an implementation, the first network supporting a paging cause function includes at least one of: a CN of the first network supporting a paging cause function, and an RAN of the first network supporting a paging cause function.

In an implementation, the first network not supporting a paging cause function includes at least one of: a CN of the first network not supporting a paging cause function, and an RAN of the first network not supporting a paging cause function.

In an implementation, according to the paging message not containing related information for indicating a paging cause or a first paging record list, it is determined that the first network or a network element of an RAN of the first network does not support paging cause related information.

In an implementation, in a case that an RAN of the first network supports the paging cause function or the second communication device supports the paging cause function, an operation of the paging message containing related information for indicating a paging cause or a first paging record list is performed.

It is not difficult to understand that even if a CN of the first network does not support the paging cause function, in a case that an RAN of the first network supports the paging cause function or the second communication device supports the paging cause function, an operation of the paging message containing related information for indicating a paging cause or a first paging record list is performed.

Optionally, the performing a related operation of sending paging cause capability information of a network includes: in a case that a twelfth condition is met, performing a related operation of sending paging cause capability information of a network,
where the twelfth condition includes at least one of:
the paging cause capability information of a network, obtained from a network element of a CN, indicating the support of a paging cause function, or the CN supporting a paging cause function,
and a network element of an RAN supporting a paging cause function;
and the performing a related operation of sending paging cause capability information of a network includes at least one of:
   broadcasting paging cause capability information of a network,
   the paging cause capability information of a network being paging cause capability information of each network supported by an RAN or a cell,
   and the paging message containing paging cause capability information of a network.

In an implementation, in the case of RAN or cell sharing, the paging cause capability information of a network is paging cause capability information of each network supported by the RAN or the cell.

Optionally, the performing an operation of the paging message only containing paging information related to terminals registered on a same network includes: in a case that a thirteenth condition is met, performing an operation of the paging message only containing paging information related to terminals registered on a same network,
where the thirteenth condition includes at least one of:
a CN of the first network and/or an RAN of the first network supporting a paging cause function,
and a second communication device supporting a paging cause function.

The information processing apparatus provided in this embodiment of this application can implement the processes implemented by the information processing method in the method embodiment in FIG. 3. To avoid repetition, details are not described herein again.

The information processing apparatus provided in this embodiment of this application can support the terminal to determine a paging cause and distinguish whether the paging cause is a second value or the paging cause is unknown.

FIG. 10 is a schematic structural view of an information processing apparatus provided in still another embodiment of this application. The information processing apparatus includes: a first sending unit 1010, configured to send third information, the third information including at least one of: first indication information and third indication information,
where
the first indication information is used for indicating one of: the terminal being in a multi-USIM mode, and the terminal being in a non-multi-USIM mode;
and the third indication information is used for indicating one of: requiring to perform a related operation of a paging cause for the terminal, and not requiring to perform a related operation of a paging cause for the terminal.

Optionally, the first sending unit 1010 is configured to send the third information to an RAN or a second communication device.

Optionally, the operation of sending the third information to an RAN or a second communication device includes: in a case that a fourteenth condition is met, sending the third information to a network element of the RAN or the second communication device, where the third information includes at least one of: first indication information and third indication information, the first indication information indicating that the terminal is in a multi-USIM mode, and the third indication information indicating that it is required to perform a related operation of a paging cause for the terminal,
where the fourteenth condition includes at least one of:
the first indication information obtained from the terminal indicating multi-USIM mode indication information,
the CN supporting a paging cause function,
and the terminal supporting a paging cause function.

Optionally, the information processing apparatus further includes a determining unit, and the determining unit is configured to determine whether a fourteenth condition is met.

Optionally, the sending the third information to an RAN or a second communication device includes at least one of:
sending the third information to the RAN through context-dependent messages of UE;
and/or
a paging request message initiated by a CN containing the third information.

In an implementation, the third information is sent to the RAN through context-dependent messages of UE.

In another implementation, the paging request message initiated by a CN is a paging request sent from a network element of the CN to a network element of an RAN and related to a terminal.

Optionally, the operation of the paging request message initiated by a CN containing the third information includes: in a case that a fifteenth condition is met, the paging request message initiated by a CN containing the third information,
where the fifteenth condition includes at least one of:
the type of data being a second value, or determining that the paging cause is a second value,
the first indication information obtained from the terminal indicating that the terminal is in a multi-USIM mode,
the CN supporting a paging cause function,
and the terminal supporting a paging cause function,
where the data includes at least one of: data of triggering paging of the terminal, received or generated data related to the terminal, downlink data of the terminal, and data corresponding to downlink data notification of the terminal.

The information processing apparatus provided in this embodiment of this application can implement the processes implemented by the information processing method in the method embodiment in FIG. 4. To avoid repetition, details are not described herein again.

The information processing apparatus provided in this embodiment of this application can support the terminal to determine a paging cause and distinguish whether the paging cause is a second value or the paging cause is unknown.

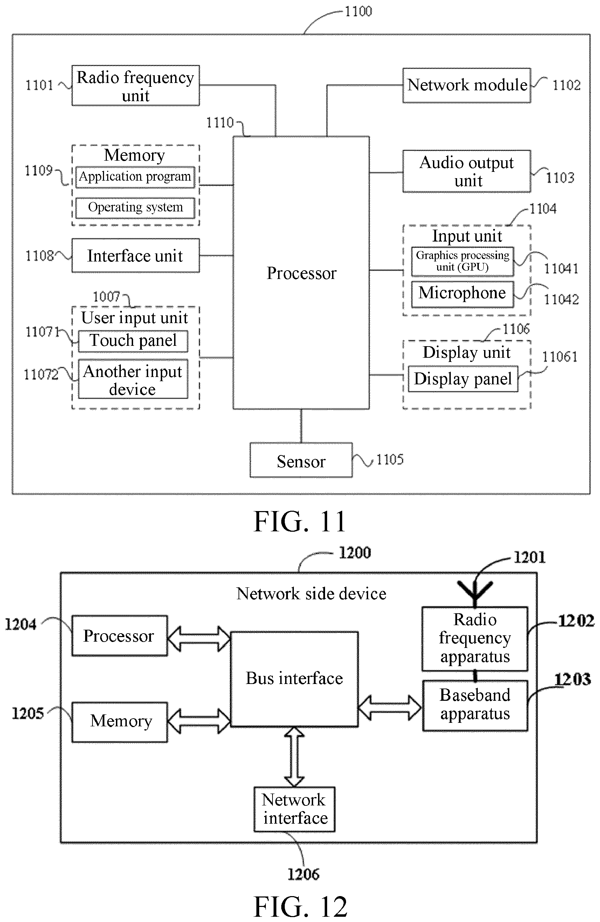

FIG. 11 is a schematic view of a hardware structure of a terminal for implementing an embodiment of this application.

The terminal 1100 includes but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

Those skilled in the art can understand that the terminal 1100 may further include a power supply (such as a battery) for supplying power to the components. The power supply may be logically connected to the processor 1110 by a power management system, thereby implementing functions such as charging, discharging and power consumption management by the power management system. The terminal structure shown in FIG. 11 does not constitute a limitation on the terminal, and the terminal may include more or fewer components than those shown in figures, or some components may be combined, or different component layouts may be used. Details are not described herein.

It should be understood that, in this embodiment of this application, the input unit 1104 may include a graphics processing unit (Graphics Processing Unit, GPU) 11041 and a microphone 11042. The GPU 11041 processes image data of a static picture or a video that is obtained by an image acquisition apparatus (such as a camera) in a video acquisition mode or an image acquisition mode. The display unit 1106 may include a display panel 11061, and the display panel 11061 may be configured in the form of a liquid crystal display (LCD), an organic light-emitting diode (OLED), or the like. The user input unit 1107 includes a touch panel 11071 and another input device 11072. The touch panel 11071 is also known as a touch screen. The touch panel 11071 may include two parts: a touch detection apparatus and a touch controller. The another input device 11072 may include, but is not limited to, a physical keyboard, a functional key (such as a volume control key or a switch key), a track ball, a mouse and a joystick, which are not described herein in detail.

In this embodiment of this application, after the radio frequency unit 1101 receives downlink data from a network side device, the downlink data is sent to the processor 1110 for processing. In addition, the downlink data is sent to the network side device. Generally, the radio frequency unit 1101 includes, but is not limited to, an antenna, at least one amplifier, a transceiver, a coupler, a low noise amplifier, a duplexer, and the like.

The memory 1109 may be configured to store a software program or an instruction and various data. The memory 1109 may mainly include a program storage area or an instruction area and a data storage area, where the program storage area or the instruction area may store an operating system, an application program or an instruction required by at least one function (for example, a sound playback function and an image playback function), and the like. In addition, the memory 1109 may include a high-speed random access memory and may further include a non-volatile memory, where The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory, such as at least one magnetic disk storage device, a flash memory device or another non-volatile solid-state storage device.

The processor 1110 may include one or more processing units. Optionally, the processor 1110 may integrate an application processor and a modem processor, where the application processor mainly processes an operating system, a user interface, an application program or an instruction, and the like, and the modem processor mainly processes wireless communication, such as a baseband processor. It can be understood that, the modem processor may not be integrated into the processor 1110.

The radio frequency unit 1101 is configured to obtain first information, the first information including at least one of: paging cause capability information of a network, a paging message received from a first network and related to a terminal, first indication information, second indication information, and paging cause capability information of the terminal.

The processor 1110 is configured to perform a first operation according to the first information, where the first operation includes at least one of: performing an operation of determining a paging cause or not performing an operation of determining a paging cause, determining that the first network supports a paging cause function or determining that the first network does not support a paging cause function, and an AS of the terminal sending a determined paging cause value to an NAS of the terminal,
where
the paging cause capability information of a network is used for indicating one of: the network supporting the paging cause function, and the network not supporting the paging cause function;
the paging cause capability information of the terminal is used for indicating one of: the terminal supporting the paging cause function, and the terminal not supporting the paging cause function;
the first indication information is used for indicating one of: the terminal being in a multi-USIM mode, and the terminal being in a non-multi-USIM mode;
and the second indication information is used for indicating one of: requiring to perform an operation of determining a paging cause, and not requiring to perform an operation of determining a paging cause.

The terminal in this embodiment of this application can perform the steps of the information processing method described in the embodiment in FIG. 2 and achieve the same technical effects. To avoid repetition, details are not described again in this embodiment of this application.

The terminal provided in this embodiment of this application can support the terminal to determine a paging cause and distinguish whether the paging cause is a second value or the paging cause is unknown.

This embodiment of this application further provides a network side device. As shown in FIG. 12, the network side device 1200 includes: an antenna 1201, a radio frequency apparatus 1202, and a baseband apparatus 1203. The antenna 1201 is connected to the radio frequency apparatus 1202. In an uplink direction, the radio frequency apparatus 1202 receives information through the antenna 1201 and sends the received information to the baseband apparatus 1203 for processing. In a downlink direction, the baseband apparatus 1203 processes the information to be sent and sends the processed information to the radio frequency apparatus 1202, and the radio frequency apparatus 1202 processes the received information and then sends the processed information out through the antenna 1201.

A frequency band processing apparatus may be located in the baseband apparatus 1203. The method implemented by the network side device in the above embodiment may be implemented in the baseband apparatus 1203. The baseband apparatus 1203 includes a processor 1204 and a memory 1205.

The baseband apparatus 1203 may include at least one baseband board, and a plurality of chips are arranged on the baseband board. As shown in FIG. 12, one of the chips may be the processor 1204 which is connected to the memory 1205 to call a program in the memory 1205 to perform the operation of the network side device shown in the above method embodiment.

The baseband apparatus 1203 may further include a network interface 1206 configured to exchange information with the radio frequency apparatus 1202. The interface may be a common public radio interface (common public radio interface, CPRI).

Specifically, the network side device in this embodiment of the present invention further includes: an instruction or a program stored in the memory 1205 and executable on the processor 1204. The processor 1204 calls the instruction or the program in the memory 1205 to implement the method implemented by each module shown in FIG. 9 and achieve the same technical effects. To avoid repetition, details are not described herein again.

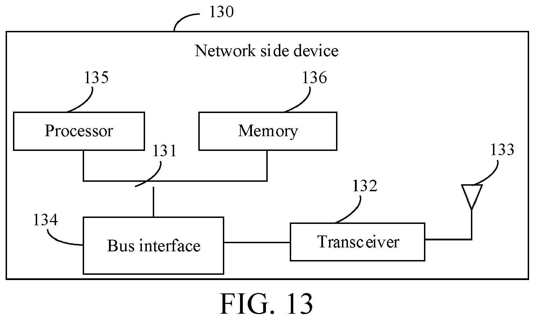

This embodiment of this application further provides a network side device. As shown in FIG. 13, the network side device 130 includes a bus 131, a transceiver 132, an antenna 133, a bus interface 134, a processor 135, and a memory 136. The bus 131 may include any number of interconnected buses and bridges, and the bus 131 connects various circuits including one or more processors represented by the processor 135 and a memory represented by the memory 136. The bus 131 may further connect various other circuits of a peripheral device, a voltage regulator, a power management circuit, and the like. This is well known in the art, and therefore, no further description is provided in this specification. The bus interface 134 provides an interface between the bus 131 and the transceiver 132. The transceiver 132 may be one component or a plurality of components, such as a plurality of receivers and senders, for providing units for communicating with various other apparatuses on a transmission medium. The data processed by the processor 135 is transmitted on a wireless medium through the antenna 133. Further, the antenna 133 also receives data and transmits the data to the processor 135.

In this embodiment of this application, the network side device 130 further includes: an instruction or a program stored in the memory 136 and executable on the processor 135. The processor 135 calls the instruction or the program in the memory 136 to implement the method implemented by each module shown in FIG. 10 and achieve the same technical effects. To avoid repetition, details are not described herein again.

An embodiment of this application further provides a readable storage medium. The readable storage medium stores a program or an instruction. The program or the instruction, when executed by a processor, implements the processes of the information processing method in the above embodiment and can achieve the same technical effects. To avoid repetition, details are not described herein again.

The processor is a processor in the electronic device described in the above embodiment. The readable storage medium may include a computer-readable storage medium, such as a read-only memory (Read-Only Memory, ROM), a random access memory (Random Access Memory, RAM), a magnetic disk, an optical disc, or the like.

An embodiment of this application further provides a chip. The chip includes a processor and a communication interface. The communication interface is coupled to the processor. The processor is configured to run a program or an instruction to implement the processes of the information processing method in the above embodiment and can achieve the same technical effects. To avoid repetition, details are not described herein again.

It should be understood that the chip mentioned in this embodiment of this application may also be referred to as a system level chip, a system chip, a chip system, an on-chip system chip, or the like.

An embodiment of this application further provides a computer program product. The computer program product is stored in a non-volatile storage medium. The computer program product, when executed by at least one processor, implements the processes of the information processing method in the above embodiment and can achieve the same technical effects. To avoid repetition, details are not described herein again.

It should be noted that, in this specification, the terms "include", "contain" or any other variants thereof are intended to cover non-exclusive inclusions, so that a process, method, article, or apparatus including a series of elements includes not only those elements, but also other elements that are not explicitly listed, or further includes elements inherent to such process, method, article, or apparatus. Without more restrictions, the element defined by the sentence "include one ..." does not exclude that there are other identical elements in the process, method, article or apparatus including this element. In addition, it should be noted that, the scope of the methods and apparatuses in the implementations of this application is not limited to perform functions in the order shown or discussed, but may also include performing functions in a substantially simultaneous manner or in an opposite order according to the functions involved. For example, the described method may be implemented in an order different from the described order, and various steps may be added, omitted or combined. In addition, features described with reference to some examples may be combined in other examples.

Through the descriptions in the above implementations, those skilled in the art can clearly understand that the methods in the above embodiments may be implemented by means of software and a necessary general hardware platform, and may also be implemented by hardware. However, in many cases, the former is the better implementation. Based on this understanding, the technical solution in this application essentially or a part contributing to the prior art may be embodied in the form of a software product. The computer software product is stored in a storage medium (such as an ROM/RAM, a magnetic disk, or an optical disc) including several instructions to enable a terminal (such as a mobile phone, a computer, a server, an air conditioner, a network device, or the like) to perform the methods described in these embodiments of this application.

These embodiments of this application are described above with reference to the accompanying drawings. However, this application is not limited to the specific implementations described above. The specific implementations described above are merely exemplary but not restrictive. Those of ordinary skill in the art may make various forms under the teaching of this application without departing from the objectives of this application and the protection scope of the claims, and such forms shall all fall within the protection scope of this application.

## Claims

1. An information processing method for a first communication device, comprising:
obtaining first information, the first information comprising at least one of: paging cause capability information of a network, a paging message received from a first network and related to a terminal, first indication information, second indication information, and paging cause capability information of the terminal; and
performing a first operation according to the first information,
wherein the first operation comprises at least one of: performing an operation of determining a paging cause or not performing an operation of determining a paging cause, determining that the first network supports a paging cause function or determining that the first network does not support a paging cause function, and an access stratum AS of the terminal sending a determined paging cause value to a non-access stratum NAS of the terminal,
wherein
the paging cause capability information of a network is used for indicating one of: the network supporting the paging cause function, and the network not supporting the paging cause function;
the paging cause capability information of the terminal is used for indicating one of: the terminal supporting the paging cause function, and the terminal not supporting the paging cause function;
the first indication information is used for indicating one of: the terminal being in a multiple universal subscriber identity module multi-USIM mode, and the terminal being in a non-multi-USIM mode;
and the second indication information is used for indicating one of: requiring to perform an operation of determining a paging cause, and not requiring to perform an operation of determining a paging cause.

2. The information processing method according to claim 1, wherein the operation of determining a paging cause comprises at least one of: determining that the paging cause is a first value, determining that the paging cause is a second value, and determining that the paging cause is unknown,
wherein
the first value comprises at least one of: a voice, a short message, IP multimedia core network subsystem IMS signaling, control plane signaling, and system message change;
the second value comprises one of: a non voice, other values except the value range of the first value, and other paging causes that trigger paging except the value range of the first value; and
the value range of the first value comprises at least one of: a voice, a short message, IMS signaling, and control plane signaling.

3. The information processing method according to claim 2, wherein the operation of determining that the paging cause is a first value comprises: in a case that a first condition is met, determining that the paging cause is the first value,
wherein the first condition comprises at least one of:
the paging message containing information for indicating that a cause for paging the terminal is the first value; and
the terminal being in a multi-USIM mode.

4. The information processing method according to claim 2, wherein the operation of determining that the paging cause is a second value comprises: in a case that a second condition is met, determining that the paging cause is the second value,
wherein the second condition comprises at least one of:
the first network supporting a paging cause function;
the paging message not containing paging cause related information related to the terminal;
the paging message not containing information for indicating that the cause for paging the terminal is the first value;
the paging message containing information for indicating that the cause for paging the terminal is the second value;
the first network supporting a paging cause function;
the terminal supporting a paging cause function; and
the terminal being in a multi-USIM mode.

5. The information processing method according to claim 1 or 2, wherein the operation of determining that the paging cause is unknown or the condition of not performing an operation of determining a paging cause comprises: in a case that a third condition is met, performing at least one of: determining that the paging cause is unknown, and not performing the operation of determining the paging cause,
wherein the third condition comprises at least one of:
the first network not supporting a paging cause function; the paging message not containing related information for indicating a paging cause or a first paging record list;
the paging message not containing information for indicating that the cause for paging the terminal is a first value;
the paging message not containing information for indicating that the cause for paging the terminal is a second value;
the terminal not supporting a paging cause function; and
the terminal being in a non-multi-USIM mode.

6. The information processing method according to claim 2 or 3, wherein the first network supporting a paging cause function comprises: determining that the first network supports a paging cause function according to at least one of:
obtaining the paging cause capability information of a network from the first network;
the paging cause capability information of the network indicating that the network supports the paging cause function; and
the paging message containing information related to a paging cause.

7. The information processing method according to claim 4, wherein the first network supporting a paging cause function comprises: an radio access network RAN of the first network supporting a paging cause function; and
the RAN of the first network supporting a paging cause function comprises: the paging message containing related information for indicating a paging cause or a first paging record list.

8. The information processing method according to claim 1, wherein the obtaining paging cause capability information of a network comprises: obtaining the paging cause capability information of a network from at least one of a network element of a core network CN of the first network and/or a network element of an RAN of the first network;
and/or
the obtaining first indication information and/or second indication information comprises: the AS of the terminal obtains first indication information and/or second indication information from the NAS of the terminal.

9. The information processing method according to claim 1, wherein the paging cause capability information of a network comprises at least one of:
paging cause capability information of each network supported by a cell or an RAN; and
paging cause capability information for each area.

10. The information processing method according to claim 1, wherein the paging cause capability information of a network comprises at least one of: paging cause capability information of a CN, and paging cause capability information of an RAN,
wherein
the paging cause capability information of a CN is used for indicating one of: the CN supporting the paging cause function, and the CN not supporting the paging cause function;
the paging cause capability information of an RAN is used for indicating one of: the RAN supporting the paging cause function, and the RAN not supporting the paging cause function;
and/or
the determining that the first network supports a paging cause function comprises: in a case that a sixteenth condition is met, determining that the first network supports a paging cause function,
wherein the sixteenth condition comprises at least one of:
the paging cause capability information of a network indicating at least one of: the first network supporting a paging cause function, the network element of the CN of the first network supporting a paging cause function, and the network element of the RAN of the first network supporting a paging cause function, and
the paging message containing related information for indicating a paging cause or a first paging record list;
and/or
the determining that the first network does not support a paging cause function comprises: in a case that a seventeenth condition is met, determining that the first network does not support a paging cause function,
wherein the seventeenth condition comprises at least one of:
the paging cause capability information of a network indicating at least one of: the first network not supporting a paging cause function, the network element of the CN of the first network not supporting a paging cause function, and the network element of the RAN of the first network not supporting a paging cause function,
and the paging message not containing related information for indicating a paging cause or a first paging record list.

11. An information processing method for a second communication device, comprising:
obtaining second information, the second information comprising at least one of: paging cause capability information of a network, a paging request sent by a CN and related to a terminal, first indication information, third indication information, and paging cause capability information of the terminal, and
performing a second operation according to the second information,
wherein the second operation comprises at least one of:
performing a related operation of sending paging cause capability information of a network,
performing a related operation of a paging cause for the terminal,
a paging message containing related information for indicating a paging cause or a first paging record list, or a paging message not containing related information for indicating a paging cause or a first paging record list,
and a paging message only containing paging information related to terminals registered on a same network,
wherein
the first indication information is used for indicating one of: the terminal being in a multi-USIM mode, and the terminal being in a non-multi-USIM mode;
the third indication information is used for indicating one of: requiring to perform a related operation of a paging cause for the terminal, and not requiring to perform a related operation of a paging cause for the terminal;
the paging cause capability information of a network is used for indicating one of: the network supporting the paging cause function, and the network not supporting the paging cause function; and
the paging cause capability information of the terminal is used for indicating one of: the terminal supporting the paging cause function, and the terminal not supporting the paging cause function.

12. The information processing method according to claim 11, wherein the performing a related operation of a paging cause for the terminal comprises at least one of:
sending a paging message related to the terminal;
determining the type of data, the data comprising at least one of: data of triggering paging of the terminal, received or generated data related to the terminal, downlink data of the terminal, and data corresponding to downlink data notification of the terminal;
performing an operation of determining a paging cause of the terminal;
performing a related operation in a case that the paging cause is a first value;
performing a related operation in a case that the paging cause is a second value;
performing a related operation in a case that the paging cause is unknown;
the paging message containing information for indicating a cause for paging the terminal; or the paging message not containing information for indicating a cause for paging the terminal;
in a case that the type of data is a first value and a second value, the paging message containing information for indicating that the cause for paging the terminal is the first value and the second value; and
in a case that the type of data is a first value and a second value, the paging message containing information for indicating that the cause for paging the terminal is the first value.

13. The information processing method according to claim 11, wherein the performing a related operation in a case that the paging cause is a first value comprises at least one of:
the paging message containing information for indicating that the cause for paging the terminal is a first value;
the paging message containing information for indicating a cause for paging the terminal; and
in a case that the type of data is more than one first value, the paging message containing information for indicating that the cause for paging the terminal is the plurality of first values,
wherein the data comprises at least one of: data of triggering paging of the terminal, received or generated data related to the terminal, downlink data of the terminal, and data corresponding to downlink data notification of the terminal.

14. The information processing method according to claim 12 or 13, wherein the performing a related operation in a case that the paging cause is a first value comprises: in a case that a fourth condition is met, performing a related operation in a case that the paging cause is a first value,
wherein the fourth condition comprises at least one of:
the paging request sent by a CN and related to a terminal containing information for indicating a first value;
the first network supporting the paging cause function;
the terminal supporting the paging cause function;
the first indication information indicating that the terminal is in a multi-USIM mode;
the third indication information indicating that it is required to perform a related operation of a paging cause for the terminal; and
determining that the paging cause of the terminal is a first value or the type of data is a first value,
wherein the data comprises at least one of: data of triggering paging of the terminal, received or generated data related to the terminal, downlink data of the terminal, and data corresponding to downlink data notification of the terminal.

15. The information processing method according to claim 12, wherein the performing a related operation in a case that the paging cause is a second value comprises at least one of:
the paging message containing information for indicating that the cause for paging the terminal is a second value; and
the paging message not containing information for indicating a cause for paging the terminal.

16. The information processing method according to claim 12, wherein the performing a related operation in a case that the paging cause is a second value comprises: in a case that a fifth condition is met, performing a related operation in a case that the paging cause is a second value,
wherein the fifth condition comprises at least one of:
the paging request sent by a CN and related to a terminal not containing information for indicating a first value or containing information for indicating a second value;
the first network supporting the paging cause function;
the terminal supporting the paging cause function;
the first indication information indicating that the terminal is in a multi-USIM mode;
the third indication information indicating that it is required to perform a related operation of a paging cause for the terminal; and
determining that the paging cause of the terminal is a second value or the type of data is not a first value or is a second value,
wherein the data comprises at least one of: data of triggering paging of the terminal, received or generated data related to the terminal, downlink data of the terminal, and data corresponding to downlink data notification of the terminal.

17. The information processing method according to claim 12, wherein the performing a related operation in a case that the paging cause is unknown comprises at least one of:
the paging message not containing information for indicating that the cause for paging the terminal is a first value;
the paging message not containing information for indicating that the cause for paging the terminal is a second value; and
the paging message not containing information for indicating a cause for paging the terminal.

18. The information processing method according to claim 12 or 17, wherein the performing a related operation in a case that the paging cause is unknown comprises: in a case that a sixth condition is met, performing a related operation in a case that the paging cause is unknown,
wherein the sixth condition comprises at least one of:
the paging request sent by a CN and related to a terminal not containing information for indicating a first value;
the paging request sent by a CN and related to a terminal not containing information for indicating a second value;
the paging request sent by a CN and related to a terminal not containing at least one of: first indication information, third indication information, and paging cause capability information of a network;
the first network not supporting the paging cause function, or not obtaining paging cause capability information of a network;
the terminal supporting the paging cause function, or not obtaining paging cause capability information of the terminal;
the first indication information indicating that the terminal is in a non-multi-USIM mode, or not obtaining the first indication information; and
the third indication information indicating that it is not required to perform a related operation of a paging cause for the terminal, or not obtaining the third indication information.

19. The information processing method according to claim 12, wherein the performing an operation of determining a paging cause of the terminal comprises: determining a paging cause of the terminal according to at least one of the type of data, the paging request sent by a CN, the paging initiated by an RAN, and the paging cause capability information of a network,
wherein
the data comprises at least one of: data of triggering paging of the terminal, received or generated data related to the terminal, downlink data of the terminal, and data corresponding to downlink data notification of the terminal; and
the determining a paging cause of the terminal according to at least one of the type of data, the paging request sent by a CN, the paging initiated by an RAN, and the paging cause capability information of a network comprises at least one of:
in a case that the paging request contains paging cause related information, determining that the paging cause is a paging cause indicated by the paging cause related information;
in a case that the paging request contains related information for indicating a first value, determining that the paging cause is the first value;
in a case that the paging request contains related information for indicating a second value, determining that the paging cause is a first value;
in a case that the paging request does not contain paging cause related information, but contains at least one of first indication information, third indication information, and paging cause function capability information of a network, determining that the paging cause is a second value;
in a case that the paging request does not contain paging cause related information, but it is determined that a network supports a paging cause function, determining that the paging cause is a second value;
in a case that the type of data is a first value or the header of data contains information for indicating a first value, determining that the paging cause is the first value;
in a case that the type of data is a second value, the header of data contains information for indicating a second value, or the header of data does not contain information for indicating a first value, determining that the paging cause is the second value;
in a case that the quality of service QoS information of data is related to a first value, determining that the paging cause is the first value;
in a case that the QoS information of data is not related to a first value, determining that the paging cause is a second value;
in a case that the data is NAS data, determining that the paging cause is a second value;
in a case that the data is data generated by a second communication device, determining that the paging cause is a second value; and
for paging initiated by an RAN and related to a terminal that is not triggered by data received from the terminal, determining that the paging cause is a second value.

20. The information processing method according to claim 12 or 19, wherein the performing an operation of determining a paging cause of the terminal comprises: in a case that a seventh condition is met, performing an operation of determining a paging cause of the terminal,
wherein the seventh condition comprises at least one of:
the first network supporting the paging cause function; and
the terminal meeting at least one of: the terminal supporting the paging cause function, the first indication information related to the terminal indicating that the terminal is in a multi-USIM mode, the third indication information related to the terminal indicating that it is required to perform a related operation of a paging cause for the terminal, and the terminal being in an inactive state or an idle state.

21. The information processing method according to claim 12, wherein the paging message containing information for indicating a cause for paging the terminal comprises: in a case that an eighth condition is met, the paging message containing information for indicating a cause for paging the terminal,
wherein the eighth condition comprises at least one of:
the first network supporting the paging cause function, and
the terminal meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
and/or
the paging message not containing information for indicating a cause for paging the terminal comprises: in a case that a ninth condition is met, the paging message not containing information for indicating a cause for paging the terminal,
wherein the ninth condition comprises at least one of:
the first network not supporting the paging cause function, or not obtaining paging cause capability information of a network, and
the terminal meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

22. The information processing method according to claim 11, wherein the performing an operation of the paging message containing related information for indicating a paging cause or a first paging record list comprises: in a case that a tenth condition is met, performing an operation of the paging message containing related information for indicating a paging cause or a first paging record list,
wherein the tenth condition comprises at least one of:
the first network supporting the paging cause function, the second communication device supporting the paging cause function, and
at least one terminal in the paging message meeting at least one of: determining that the paging cause of the terminal is a first value, the paging request sent by a CN and related to a terminal containing information for indicating a first value, the terminal supporting the paging cause function, the first indication information related to the terminal indicating that the terminal is in a multi-USIM mode, and the third indication information related to the terminal indicating that it is required to perform a related operation of a paging cause for the terminal;
and/or
the performing an operation of the paging message not containing related information for indicating a paging cause or a first paging record list comprises: in a case that an eleventh condition is met, performing an operation of the paging message not containing related information for indicating a paging cause or a first paging record list,
wherein the eleventh condition comprises at least one of:
the first network not supporting the paging cause function, or not obtaining paging cause capability information of a network, and
the second communication device not supporting the paging cause function, and any terminal in the paging message meeting at least one of: determining that the paging cause of the terminal is a second value and/or is unknown, the paging request sent by a CN and related to a terminal not containing information for indicating a first value and/or a second value, the terminal not supporting the paging cause function, or not obtaining paging cause capability information of the terminal, the first indication information related to the terminal indicating that the terminal is in a non-multi-USIM mode, or not obtaining first indication information related to the terminal, and the third indication information related to the terminal indicating that it is not required to perform a related operation of a paging cause for the terminal, or not obtaining third indication information related to the terminal.

23. The information processing method according to claim 11, wherein the performing a related operation of sending paging cause capability information of a network comprises: in a case that a twelfth condition is met, performing a related operation of sending paging cause capability information of a network,
wherein the twelfth condition comprises at least one of:
the paging cause capability information of a network, obtained from a network element of a CN, indicating the support of a paging cause function, or the CN supporting a paging cause function, and
a network element of an RAN supporting a paging cause function;
and the performing a related operation of sending paging cause capability information of a network comprises at least one of:
broadcasting paging cause capability information of a network,
the paging cause capability information of a network being paging cause capability information of each network supported by an RAN or a cell, and
the paging message containing paging cause capability information of a network.

24. The information processing method according to claim 11, wherein the performing an operation of the paging message only containing paging information related to terminals registered on a same network comprises: in a case that a thirteenth condition is met, performing an operation of the paging message only containing paging information related to terminals registered on a same network,
wherein the thirteenth condition comprises at least one of:
a CN of the first network and/or an RAN of the first network supporting a paging cause function, and
a second communication device supporting a paging cause function.

25. An information processing method, comprising:
sending third information, the third information comprising at least one of: first indication information and third indication information,
wherein
the first indication information is used for indicating one of: the terminal being in a multi-USIM mode, and the terminal being in a non-multi-USIM mode; and
the third indication information is used for indicating one of: requiring to perform a related operation of a paging cause for the terminal, and not requiring to perform a related operation of a paging cause for the terminal.

26. The information processing method according to claim 25, further comprising:
sending the third information to an RAN or a second communication device.

27. The information processing method according to claim 26, wherein the operation of sending the third information to an RAN or a second communication device comprises: in a case that a fourteenth condition is met, sending the third information to a network element of the RAN or the second communication device, wherein the third information comprises at least one of: first indication information and third indication information, the first indication information indicating that the terminal is in a multi-USIM mode, and the third indication information indicating that it is required to perform a related operation of a paging cause for the terminal,
wherein the fourteenth condition comprises at least one of:
the first indication information obtained from the terminal indicating multi-USIM mode indication information,
the CN supporting a paging cause function, and
the terminal supporting a paging cause function.

28. The information processing method according to claim 26, wherein the sending the third information to an RAN or a second communication device comprises at least one of:
sending the third information to the RAN through context-dependent messages of user equipment UE;
and/or
a paging request message initiated by a CN containing the third information.

29. The information processing method according to claim 28, wherein the operation of the paging request message initiated by a CN containing the third information comprises: in a case that a fifteenth condition is met, the paging request message initiated by a CN containing the third information,
wherein the fifteenth condition comprises at least one of:
the type of data being a second value, or determining that the paging cause is a second value,
the first indication information obtained from the terminal indicating that the terminal is in a multi-USIM mode,
the CN supporting a paging cause function, and
the terminal supporting a paging cause function,
wherein the data comprises at least one of: data of triggering paging of the terminal, received or generated data related to the terminal, downlink data of the terminal, and data corresponding to downlink data notification of the terminal.

30. An information processing apparatus, comprising:
a first obtaining unit, configured to obtain first information, the first information comprising at least one of: paging cause capability information of a network, a paging message received from a first network and related to a terminal, first indication information, second indication information, and paging cause capability information of the terminal; and
a first execution unit, configured to perform a first operation according to the first information,
wherein the first operation comprises at least one of: performing an operation of determining a paging cause or not performing an operation of determining a paging cause, determining that the first network supports a paging cause function or determining that the first network does not support a paging cause function, and an AS of the terminal sending a determined paging cause value to an NAS of the terminal,
wherein
the paging cause capability information of a network is used for indicating one of: the network supporting the paging cause function, and the network not supporting the paging cause function;
the paging cause capability information of the terminal is used for indicating one of: the terminal supporting the paging cause function, and the terminal not supporting the paging cause function;
the first indication information is used for indicating one of: the terminal being in a multi-USIM mode, and the terminal being in a non-multi-USIM mode; and
the second indication information is used for indicating one of: requiring to perform an operation of determining a paging cause, and not requiring to perform an operation of determining a paging cause.

31. An information processing apparatus, comprising:
a second obtaining unit, configured to obtain second information, the second information comprising at least one of: paging cause capability information of a network, a paging request sent by a CN and related to a terminal, first indication information, third indication information, and paging cause capability information of the terminal; and
a second execution unit, configured to perform a second operation according to the second information, wherein the second operation comprises at least one of:
performing a related operation of sending paging cause capability information of a network,
performing a related operation of a paging cause for the terminal,
a paging message containing related information for indicating a paging cause or a first paging record list, or a paging message not containing related information for indicating a paging cause or a first paging record list,
and a paging message only containing paging information related to terminals registered on a same network,
wherein
the first indication information is used for indicating one of: the terminal being in a multi-USIM mode, and the terminal being in a non-multi-USIM mode;
the third indication information is used for indicating one of: requiring to perform a related operation of a paging cause for the terminal, and not requiring to perform a related operation of a paging cause for the terminal;
the paging cause capability information of a network is used for indicating one of: the network supporting the paging cause function, and the network not supporting the paging cause function; and
the paging cause capability information of the terminal is used for indicating one of: the terminal supporting the paging cause function, and the terminal not supporting the paging cause function.

32. An information processing apparatus, comprising:
a first sending unit, configured to send third information, the third information comprising at least one of: first indication information and third indication information,
wherein
the first indication information is used for indicating one of: the terminal being in a multi-USIM mode, and the terminal being in a non-multi-USIM mode; and
the third indication information is used for indicating one of: requiring to perform a related operation of a paging cause for the terminal, and not requiring to perform a related operation of a paging cause for the terminal.

33. A terminal, comprising a processor, a memory, and a program or an instruction stored in the memory and executable on the processor, wherein the program or instruction, when executed by the processor, implements steps of the information processing method according to any one of claims 1 to 10.

34. A network side device, comprising a processor, a memory, and a program or an instruction stored in the memory and executable on the processor, wherein the program or instruction, when executed by the processor, implements steps of the information processing method according to any one of claims 11 to 24, or the program or instruction, when executed by the processor, implements steps of the information processing method according to any one of claims 25 to 29.

35. A readable storage medium, storing a program or an instruction, wherein the program or instruction, when executed by a processor, implements steps of the information processing method according to any one of claims 1 to 29.

36. A chip, comprising a processor and a communication interface, wherein the communication interface is coupled to the processor, and the processor is configured to run a program or an instruction to implement steps of the information processing method according to any one of claims 1 to 29.

37. A computer program product, stored in a non-volatile storage medium, the program product implementing steps of the information processing method according to any one of claims 1 to 29 when executed by at least one processor.
